(19) Europäisches Patentamt
European Patent Office
Office européen des brevets

(11) EP 2 113 807 A2

(12) **EUROPEAN PATENT APPLICATION**

(43) Date of publication:
**04.11.2009 Bulletin 2009/45**

(51) Int Cl.:
***G02F 1/1335*** *(2006.01)* ***G02F 1/13363*** *(2006.01)*

(21) Application number: **09006019.5**

(22) Date of filing: **30.04.2009**

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **30.04.2008 JP 2008118906**

(71) Applicant: **Fujifilm Corporation**
**Tokyo 106-0031 (JP)**

(72) Inventors:
- **Amimori, Ichiro**
  **Kanagawa 250-0193 (JP)**
- **Nakajima, Masao**
  **Kanagawa 250-0193 (JP)**
- **Suzuki, Satomi**
  **Kanagawa 250-0193 (JP)**
- **Morishima, Shinichi**
  **Kanagawa 250-0193 (JP)**

(74) Representative: **HOFFMANN EITLE**
**Patent- und Rechtsanwälte**
**Arabellastrasse 4**
**81925 München (DE)**

(54) **Optical material having a colored optically anisotropic layer**

(57) An optical material including a colored optically anisotropic layer, the colored optically anisotropic layer having at least one maximum absorption wavelength with a nonpolarized light transmittance of 30 percent or lower in a wavelength range of 430 to 700 nm, wherein the absorbance Amax at the polarization of maximum absorbance and the absorbance Amin at the polarization of minimum absorbance of the colored optically anisotropic layer satisfy the following relation at the maximum absorption wavelength: 1.0 ≤ Amax/Amin ≤ 1.4,and the in-plane retardation of the colored optically anisotropic layer is greater than or equal to 10 nm and less than 1,000 nm, which can be employed as a material for forming a color filter having optical compensation capability.

Fig.1

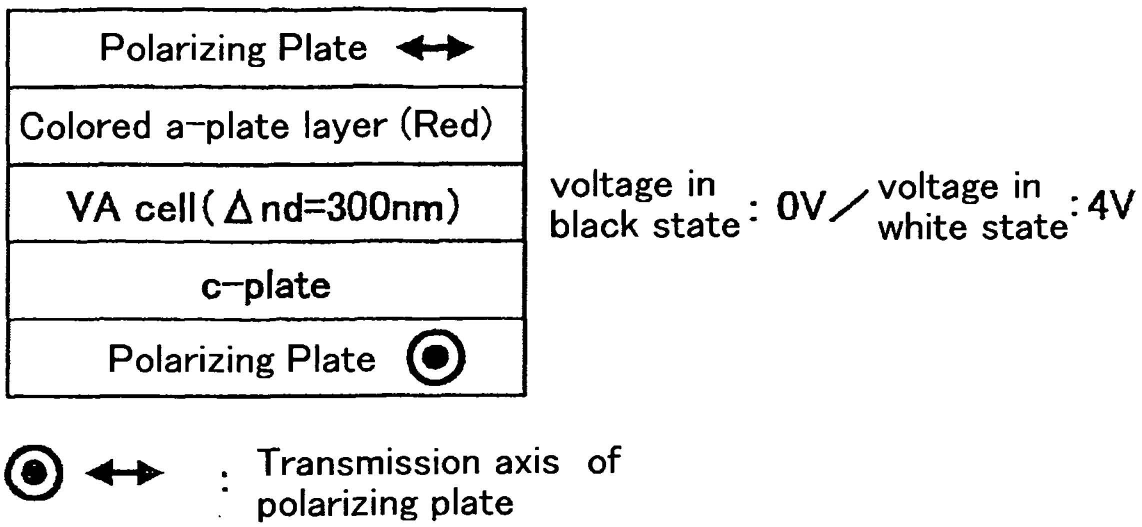




Printed by Jouve, 75001 PARIS (FR)

## Description

TECHNICAL FIELD

The present invention relates to an optical material having a colored optically anisotropic layer, and to a substrate for a liquid crystal display device with an optically anisotropic color filter formed by using the above optical material.

RELATED ART

A CRT (cathode ray tube) has been mainly employed in various display devices used for office automation (OA) equipment such as a word processor, a notebook-sized personal computer and a personal computer monitor, mobile phone terminal and television set. In recent years, a liquid crystal display device has more widely been used in place of a CRT, because of its thinness, lightweight and low power consumption. A liquid crystal display device usually comprises a liquid crystal cell and polarizing plates. The polarizing plate usually has protective films and a polarizing film, and is obtained typically by dying a polarizing film composed of a polyvinyl alcohol film with iodine, stretching the film, and laminating the film with the protective films on both surfaces. A transmissive liquid crystal display device usually comprises polarizing plates on both sides of a liquid crystal cell, and occasionally comprises one or more optical compensation films. A reflective liquid crystal display device usually comprises a reflector plate, a liquid crystal cell, one or more optical compensation films, and a polarizing plate in this order. A liquid crystal cell comprises liquid-crystalline molecules, two substrates encapsulating the liquid-crystalline molecules, and electrode layers applying voltage to the liquid-crystalline molecules. The liquid crystal cell switches ON and OFF displays depending on variation in orientation state of the liquid-crystalline molecules, and is applicable both to transmission type and reflective type, of which display modes ever proposed include TN (twisted nematic), IPS (in-plane switching), OCB (optically compensatory bend) and VA (vertically aligned) ECB (electrically controlled birefringence), and STN(super twisted nematic). Color and contrast displayed by the conventional liquid crystal display device, however, vary depending on the viewing angle. Therefore, it cannot be said that the viewing angle characteristics of the liquid crystal display device is superior to those of the CRT.

In order to improve the viewing angle characteristics, retardation plates for viewing-angle optical compensation, or, in other words, optical compensation sheets, have been used. There have been proposed various LCDs, employing a mode and an optical compensation sheet having an appropriate optical property for the mode, excellent in contrast characteristics without dependency on viewing angles. An OCB, VA or IPS modes are known as a wide-viewing mode, and LCDs employing such a mode can give a good contrast characteristic in all around view, and, then, become widely used as a home screen such as TV. Such optical compensation sheets can effectively contribute to reducing viewing angle dependence of contrast, but cannot contribute to reducing viewing angle characteristics of color sufficiently. Therefore reducing viewing angle dependence of color is considered to be an important problem to be solved for LCD.

Viewing angle characteristics of color of LCD is ascribable to difference in wavelength of three representative colors of R, G and B, so that even R, G and B lights go through are given equal retardation, the changes in polarization states of R, G and B lights brought about by the retardation are different each other. Optimization in this regard involves optimization of the dependence of birefringence on wavelength of an optically anisotropic material, that is, optimization of birefringence wavelength dispersion for R, G, and B. In current LCDs, the birefringence wavelength dispersion of the liquid crystal molecules used in the ON and OFF displays, and the birefringence wavelength dispersion of optical compensation sheets, cannot be readily controlled. Thus, viewing angle characteristics of color have yet to be adequately improved.

An optical compensation sheet controlling birefringence wavelength dispersion for viewing angle characteristics of color has been proposed in the form of a retardation plate employing modified polycarbonate (Japanese Unexamined Patent Publication (KOKAI) No. 2004-37837). Viewing angle characteristics of color are improved by employing this sheet as a $\lambda/4$ plate or as an optical compensation sheet in VA mode in a reflective liquid crystal display device. It has, however, not been widely used yet for LCD, not only because the modified polycarbonate film is expensive, but also because the film tends to cause non-uniformity in the optical characteristics such as bowing during stretching included in the process of producing them.

Additionally, a method of independent compensation of the three colors of R, G, and B has been proposed utilizing the same principle as that of contrast viewing field compensation with an optical compensation sheet (GB2,394,718). This is achieved primarily by a method of patterning in combination with color filters and the like in the liquid crystal cells. However, it is still difficult to form optically anisotropic layers having optically uniform retardation characteristics with materials that permit patterning within liquid-crystal cells. Further, after forming color filter layers for the three colors of RGB in three photolithographic steps, it is necessary to conduct patterning while positioning materials that are optimal for the three colors of RGB in three photolithographic steps. Thus, there are problems in the form of a substantial process load and poor yield.

A material capable of solving these problems has been proposed in the form of a color filter material with c-plate function that is equipped with both coloring properties and optical anisotropy (Japanese Unexamined Patent Publication (KOKAI) No. 2001-290023). However, since this material does not have in-plane retardation, viewing angle compensation of an LCD in VA mode or IPS mode requires a separate optically anisotropic layer having in-plane retardation, thus making it impossible to solve most of the above-stated problems. Further, although a material comprised of a mixture of the liquid crystals and dichroic dyes employed for some time in guest-host LCDs is one example of an optically anisotropic material having coloration and in-plane retardation (Japanese Unexamined Patent Publication (KOKAI) Showa No. 53-35564), its LCD display characteristics are inadequate.

SUMMARY OF THE INVENTION

The object of the present invention is to provide an optical material having a colored optically anisotropic layer that can be employed as a material for forming a color filter having optical compensation capability in a liquid-crystal display device.

As the result of extensive research, the present inventors discovered that by imparting color to an optically anisotropic layer while carefully observing light absorption relative to the polarization direction, it was discovered that an optical material having a colored optically anisotropic layer could be manufactured that was useful as a color filter-forming material having optical compensation capability. The present invention was devised based on this information.

The present invention thus provides [1] to [13] below:

[1] An optical material comprising a colored optically anisotropic layer, the colored optically anisotropic layer having at least one maximum absorption wavelength with a nonpolarized light transmittance of 30 percent or lower in a wavelength range of 430 to 700 nm, wherein the absorbance Amax at the polarization of maximum absorbance and the absorbance Amin at the polarization of minimum absorbance of the colored optically anisotropic layer satisfy the following relation at the maximum absorption wavelength:

$$1.0 \leq Amax/Amin \leq 1.4,$$

and the in-plane retardation of the colored optically anisotropic layer is greater than or equal to 10 nm and less than 1,000 nm.

[2] The optical material according to [1], wherein the colored optically anisotropic layer is a layer formed from a composition comprising a liquid crystalline compound.

[3] The optical material according to [2], wherein the colored optically anisotropic layer is a layer formed from a composition comprising a liquid crystalline compound having two or more intramolecular polymerizable groups.

[4] The optical material according to any one of [1] to [3], wherein the colored optically anisotropic layer is a layer formed from a composition comprising a pigment with a particle diameter of 20 nm or less or a dye that is soluble in solvent.

[5] The optical material according to any one of [1] to [4], wherein the colored optically anisotropic layer is a layer formed from a composition containing a compound denoted by general formula (D1), (D2), or (D3) below: General formula (D1):

$$Q-N=N-Q$$

General formula (D2):

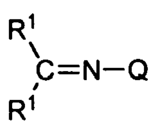

General formula (D3):

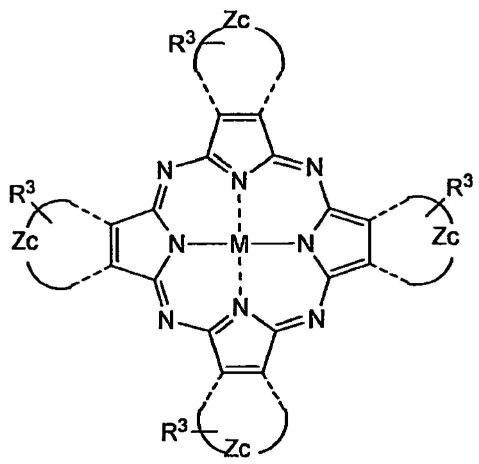

$R^3$ = H, Br, or

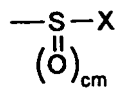

(where in general formulas (D1) to (D3), Q may be identical to or different from the other, and denotes an optionally substituted five- to seven-membered ring; $R^1$ may be identical to or different from the other and denotes a substituent, or both instances of $R^1$ are bonded together to form an optionally substituted five- to seven-membered ring; M denotes two hydrogen atoms, a divalent metal atom, a divalent metal oxide, a divalent metal hydroxide, or a divalent metal chloride; Zc denotes a nonmetal atom group required to form a six-membered ring with two carbon atoms to which Zc is bonded; $R^3$ may be identical to or different from the others, and denotes a substituent; X denotes a substituent; and cm denotes 0, 1, or 2).

[6] The optical material according to any one of [1] to [5], having biaxial refractive index anisotropy.

[7] The optical material according to [1], wherein the colored optically anisotropic layer comprises a liquid crystalline compound, a diazo or trisazo dichroic dye, and a chiral agent, and is a cholesterically oriented layer.

[8] The optical material according to any one of [1] to [7], wherein the colored optically anisotropic layer is comprised of two or more regions, each of which has at least one maximum absorption wavelength differing from those of the other regions.

[9] The optical material according to [8], wherein each of the regions has a maximum absorption wavelength selected from the group consisting of 435 $\pm$ 30 nm, 545 $\pm$ 30 nm, and 610 $\pm$ 40 nm, and the maximum absorption wavelength of each region is different from those of the other regions.

[10] The optical material according to [8], wherein each of the regions has two maximum absorption wavelengths selected from the group consisting of 435 $\pm$ 30 nm, 545 $\pm$ 30 nm, and 610 $\pm$ 40 nm, and at least one of the maximum absorption wavelengths of each region is different from those of the other regions.

[11] The optical material according to any one of [8] to [10], wherein each of the regions is formed by an inkjet process.

[12] A liquid-crystal display device comprising an optical anisotropic color filter in the form of the optical material described in any one of [8] to [11].

[13] The liquid-crystal display device according to [12],

characterized by being in VA, IPS, or FFS mode.

BRIEF DESCRIPTION OF THE DRAWINGS

Fig. 1 is a structural diagram of a VA-LCD employed in the simulation of Example 5.

Fig. 2 is a chart of the results of calculating the dependence of color change from black to white by the application of voltage (black: no voltage applied; white: maximum voltage applied) on the dichroic ratio when the dichroic ratio of a colored optically anisotropic layer was changed in a VA-LCD having a colored optically anisotropic layer.

MODES OF CARRYING OUT THE INVENTION

Paragraphs below will detail the present invention.

In the specification, ranges indicated with "to" mean ranges including the numerical values before and after "to" as the minimum and maximum values.

In the specification, retardation or Re represents in-plane retardation. The in-plane retardation (front retardation) Re at the wavelength of λnm is measured by means of KOBRA 21ADH or WR manufactured by Oji Scientific Instruments while applying a λnm wavelength light in the normal line direction of the film. In the specification, λ is 611±5 nm, 545±5 nm and 435±5 nm for R, G and B, respectively, and denotes 545±5 nm or 590±5 nm if no specific description is made on color.

It is to be noted that, regarding angles, the term "substantially" in the context of this specification means that a tolerance of less than ±5° with respect to the precise angles can be allowed. Difference from the precise angles is preferably less than 4°, and more preferably less than 3°. It is also to be noted that, regarding retardation values, the term "substantially" in the context of the specification means that a tolerance of less than ±5% with respect to the precise values can be allowed. It is also to be noted that the term "The Re value is substantially not zero" in the context of the specification means that the Re value is not less than 5 nm. The measurement wavelength for refractive indexes is a visible light wavelength, unless otherwise noted. It is also to be noted that the term "visible light" in the context of the specification means light of a wavelength falling within the range from 400 to 700 nm.

In the specification, the term "colored" referred to in "colored optical anisotropic layer" means the presence of a wavelength with a transmittance of 30 percent or lower in the wavelength spectrum of 430 to 700 nm as measured by irradiating (nonpolarized) light in a direction normal to the layer. The term "transmittance" means the ratio of transmitted light to incident light, expressed as a percentage. The colored optically anisotropic layer of the optical material of the present invention has at least one maximum absorbance wavelength, preferably 1 or 2, more preferably 1, within the above spectrum. The maximum absorption wavelength is preferably a wavelength selected from the group consisting of 435 ± 30 nm, 545 ± 30 nm, and 610 ± 40 nm.

In the specification, the term "maximum absorbance wavelength" may refer to "local maximum absorbance wavelength".

The colored optically anisotropic layer in the optical material of the present invention is **characterized in that** the coloration, that is, light absorption property, is essentially isotropic.

The isotropy of the optical absorption property can be evaluated with a spectrophotometer equipped with a polarizing filter. A polarizing filter is provided on the light source side. The sample is rotated within a calibrated spectrophotometer, the absorbance Amax in the direction of maximum absorbance at the maximum absorption wavelength is measured, and the absorbance Amin in the direction of minimum absorbance at the maximum absorption wavelength (normally, a direction orthogonal to the direction of maximum absorbance at the maximum absorption wavelength) is measured. Generally, the closer the ratio of Amax/Amin (dichroic ratio) is to 1, the greater the isotropy is thought to be. Based on research, as indicated in an embodiment described further below, the present inventors found that an Amax/Amin ratio of 1.4 or lower was essentially isotropic in terms of suitability as a color filter in a liquid-crystal display device.

Absorbance A means the numerical value denoted by $\log_{10}(I_0/I)$ when the optical intensity of light entering in a direction normal to the optically anisotropic layer is denoted as $I_0$ and the intensity of transmitted light is denoted as I.

For example, Amax/Amin is 10 or greater for the mixture of dichroic pigment and liquid crystals, such as is employed in a guest-host LCD that has been known for some time as an optically anisotropic material having coloration and in-plane retardation. When a color filter having such dichroic properties is employed in a liquid-crystal display device, there is a problem in that in order to display color, the axis of dichroic absorption of the color filter must be adjusted to align it with the direction of polarization (transmission axis direction) of the light passing through the color filter in the liquid-crystal display device. However, the state of polarization of the light entering the color filter varies from black to white to all intermediate gradations. Thus, when the axis of dichroic absorption is fixed, there are problems in that colors are lost in dark displays, and colors end up changing from dark to light displays based on differences in the dichroic property (Amax/Amin) of individual colors. In the optical material of the present invention, the Amax/Amin of the above-described optically anisotropic layer is not less than 1.0 and not greater than 1.4. Thus, in the same manner as in common color filters and optically anisotropic layers, it can be employed in a liquid-crystal display device as an optically anisotropic layer and color filter.

[The absorptive material]

For the above reasons, a material that is not dichroic, that is, a material that has isotropic absorption, is desirably employed in the optically anisotropic layer as the absorptive material employed in the present invention, that is, as the material for bringing about coloration in the optically anisotropic layer. Accordingly, this includes not just cases where absorption is isotropic in the individual molecules of the compound employed as the absorptive material, but also cases of random orientation within the optically anisotropic layer, where absorption of the material as a whole is isotropic. In particular, when an optically anisotropic layer is formed from a composition including a compound with liquid crystal properties, the use of a material comprised of a compound that does not orient in a certain direction with the liquid

crystalline compound is desirable.

Although not specifically limited, one or a combination of two or more compounds having absorptive properties that are capable of displaying (red) R, (green) G, (blue) B, cyan, magenta, or yellow is desirably employed as the absorptive material for application in a full-color LCD.

Further, when additionally employing a liquid crystalline compound as an optical anisotropy-manifesting material, it is desirable to employ a pigment with a particle diameter of 20 nm or less or a dye that is soluble in solvent as the absorptive material so as not to affect the orientation properties of the liquid crystals. A pigment with a particle diameter of 10 nm or less is preferred. When the pigment is anisotropic in shape, an acicular shape with a minor axis of 20 nm or less or a tabular shape with a major axis of 20 nm or less will suffice. The absorptive material desirably has considerable heat resistance. The use of a highly heat-resistant dye or a nanopigment undergoing no change in absorption spectrum even when subjected to a heat treatment of 230°C for one hour is desirable.

Examples of such nanopigments are the organic pigments prepared by nanocrystal growth described in "The latest techniques in organic crystalline materials" (published by CMC), as well as gold, silver, platinum, and other metal and inorganic oxide nanoparticles. Specifically, nanopigments such as those described in Japanese Unexamined Patent Publication (KOKAI) Heisei No. 10-330638, and Japanese Unexamined Patent Publication (KOKAI) Nos. 2001-335804, 2004-151313, 2007-23168, 2007-112876, 2007-169575, and 2007-262378 can be employed. Examples of highly heat resistance dyes include diarylmethane dyes; triarylmethane dyes; thiazole dyes; merocyanine dyes; pyrazolonemethine and other methine dyes; indoaniline dyes; azomethine dyes typified by acetophenoneazomethine, pyrazoloazomethine, imidazolazomethine, imidazoazomethine, and pyridoneazomethine; xanthene dyes; oxazine dyes; cyanostyrene dyes typified by dicyanostyrene and tricyanostyrene; thiazine dyes; azine dyes; acrylidine dyes; benzeneazo dyes; azo dyes such as pyridoneazo, thiopheneazo, isothiazoleazo, pyrroleazo, pyralazo, imidazoleazo, thiadiazoleazo, triazoleazo, and disazo; spiropyran dyes; indolinospiropyran dyes; fluoran dyes; rhodaminelactam dyes; naphthoquinone dyes, anthraquinone dyes; and quinophthalone dyes. Specifically, dyes such as those described in Japanese Unexamined Patent Publication (KOKAI) Nos. 2005-189802, 2006-47497, 2006-47581, 2006-47582, 2006-47676, 2006-47752, 2006-58700, 2006-71822, 2006-91190, 2006-330717, 2006-330718, 2006-47752, and 2007-94188 can be employed.

The above highly heat-resistant dye can be employed without particular limitation, and can be selected from among dyes the use of which is known in conventional color filter applications. Among these dyes, those that are soluble in organic solvents are desirable. Examples include the dyes described in Japanese Unexamined Patent Publication (KOKAI) Showa Nos. 64-90403 and 64-91102; Japanese Unexamined Patent Publication (KOKAI) Heisei Nos. 1-94301 and 6-11614; Japanese Patent Registration No. 2592207; U.S. Patent Nos. 4,808,501, 5,667,920, and 5,059,500; and Japanese Unexamined Patent Publication (KOKAI) Heisei Nos. 5-333207, 6-35183, 6-51115, and 6-194828.

In terms of chemical structure, azo dyes such as pyrazoleazo, anilinoazo, arylazo, pyrazoloazoleazo, and pyridoneazo dyes; triphenylmethane dyes; anthraquinone dyes; anthrapyridone dyes; benzylidene dyes; oxanol dyes; cyanine dyes; phenothiazine dyes; pyrrolopyrazoleazomethine dyes; xanthene dyes, phthalocyanine dyes; benzopyran dyes; and indigo dyes can be employed. Pyrazoleazo, anilinoazo, pyrazolotriazoleazo, pyridoneazo, anthraquinone, and anthrapyridone dyes are preferred.

The compounds denoted by general formulas (D1), (D2), and (D3) are preferable examples of the absorptive material employed in the present invention.

General formula (D1): Q-N=N-Q

General formula (D2):

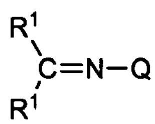

General formula (D3):

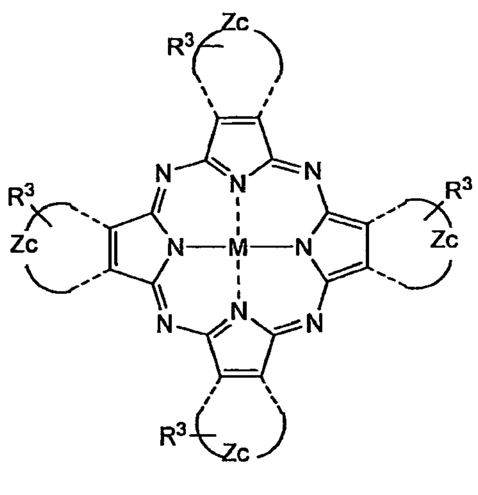

$R^3$ = H, Br, or

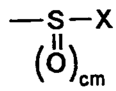

In general formulas (D1) to (D3), each instance of Q, which may be identical to or different from the other, denotes an optionally substituted five- to seven-membered ring; each instance of $R^1$, which may be identical to or different from the other, denotes a substituent, or both instances of $R^1$ are bonded together to form an optionally substituted five- to seven-membered ring; M denotes two hydrogen atoms, a divalent metal atom, a divalent metal oxide, a divalent metal hydroxide, or a divalent metal chloride; Zc denotes a nonmetal atom group required to form a six-membered ring with the two carbon atoms to which Zc is bonded; each instance of $R^3$, which may be identical to or different from the others, denotes a substituent; X denotes a substituent; and cm denotes 0, 1, or 2.

Examples of desirable structures of (D1) are given by general formulas (D11), (D12), and (D13) below:

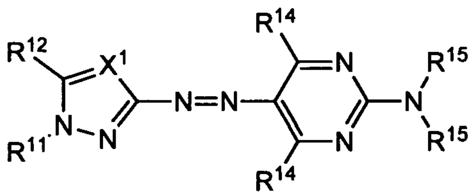

General formula (D11)

In general formula (D11), $R^{11}$ denotes a heterocyclic group; $R^{12}$ denotes a hydrogen atom or a substituent; $X^1$ denotes -N= or -C($R^{13}$)=; and $R^{13}$ denotes a hydrogen atom or a substituent. When $X^1$ denotes -C($R^{13}$)=, $R^{12}$ and $R^{13}$ can be bonded together to form a five- to seven-membered ring. Each instance of $R^{14}$, which may be identical to or different from the other, denotes a hydrogen atom or a substituent. Each instance of $R^{15}$, which may be identical or different from the other, denotes hydrogen atom, an alkyl group, an alkenyl group, an alkynyl group, an aryl group, a heterocyclic group, an acyl group, an alkoxycarbonyl group, an aryloxycarbonyl group, a carbamoyl group, an alkylsulfonyl group, an arylsulfonyl group, or a sulfamoyl group, and the two instances of $R^{15}$ may be bonded together to form a five- to seven-membered ring.

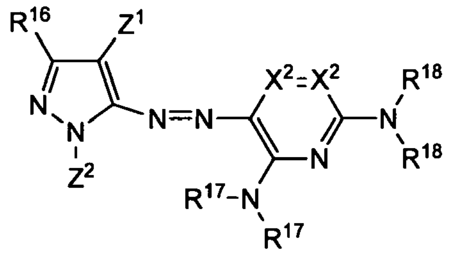

General formula (D12)

In general formula (D12), $Z^1$ denotes an electron-withdrawing group with a Hammett substituent constant σ p of 0.20 or higher. Each instance of $X^2$, which may be identical to or different from the other, denotes $-CR^{16}=$ or a nitrogen atom. $R^{16}$ denotes hydrogen atom, a halogen atom, an aliphatic group, an aromatic group, a heterocyclic group, cyano group, carboxyl group, a group, an alkoxycarbonyl group, an aryloxycarbonyl group, an acyl group, hydroxy group, an alkoxy group, an aryloxy group, a silyloxy group, an acyloxy group, a carbamoyloxy group, a heterocyclic oxy group, an alkoxycarbonyloxy group, an aryloxycarbonyloxy group, an amino group substituted with an alkyl, aryl, or heterocyclic group, an acylamino group, ureido group, sulfamoylamino group, an alkoxycarbonylamino group, an aryloxycarbonylamino group, an alkylsulfonylamino group, an arylsulfonylamino group, nitro group, an alkylthio group, an arylthio group, an alkylsulfonyl group, an arylsulfonyl group, an alkylsulfinyl group, an arylsulfinyl group, sulfamoyl group, sulfo group; or a heterocyclic thio group. When $X^2$ denotes $-CR^{16}=$, the two instances of $R^{16}$ may be identical or different. Each of $R^{17}$ and $R^{18}$, which may be identical or different, denotes hydrogen atom, an aliphatic group, an aromatic group, a heterocyclic group, an acyl group, an alkoxycarbonyl group, an aryloxycarbonyl group, a carbamoyl group, an alkylsulfonyl group, an arylsulfonyl group, or sulfamoyl group. Both instances of $R^{18}$ do not simultaneously denote hydrogen atoms. $R^{16}$, $R^{17}$, and $R^{18}$ may be bonded together to form a five- or six-membered ring. $Z^2$ denotes a monocyclic five-membered heterocyclic group.

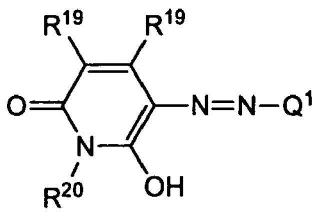

General formula (D13)

In general formula (D13), each instance of $R^{19}$, which may be identical to or different from the other, denotes hydrogen atom or a substituent. $R^{20}$ denotes hydrogen atom, an aliphatic group, an aryl group, a heterocyclic group, a carbamoyl group, an alkoxycarbonyl group, an aryloxycarbonyl group, an acyl group, an alkoxysulfonyl group, an arylsulfonyl group, or sulfamoyl group, each of which may be further substituted with a substituent. $Q^1$ denotes a diazo component residue. The dye denoted by general formula (D13) may form a polymer in the form of a dimer or higher at any position.

The Hammett substituent constant σ p employed in the present Specification in connection with substituent $Z^1$ will be described here. Hammett's rule is an empirical rule proposed by L. P. Hammett in 1935 to quantitatively describe the effects of substituents on benzene derivative reactions and equilibrium. It is widely accepted today. The substituent constants obtained by Hammett' s rule are σ p and σ m. These values can be seen in numerous general treatises. For example, details are to be found in J. A. Dean, ed., Lange's Handbook of Chemistry, 12th ed., 1979 (McGraw-Hill), The Chemical Domain, Special Edition, No. 122, pp. 96-103, 1979 (Nankodo). Each substituent in the present invention is limited and described based on Hammett's substituent constant σ p. However, this is not limited to given substituents the values of which are known in the literature and appear in the above-cited treatises, but also applies to substituents, assumed to fall within the scope of measurements based on Hammett's rule, the values of which have not been published in the literature. General formula (D12) includes compounds that are not benzene derivatives. However, the value of σ p is employed irrespective of the site of substitution as a yardstick of the electron effects of a substituent. The σ p value is employed in the present invention with this meaning.

Examples of electron-withdrawing groups having a Hammett's substituent constant σ p of 0.60 or higher are: cyano groups, nitro groups, alkylsulfonyl groups (such as methanesulfonyl groups), and arylsulfonyl groups (such as

benzenesulfonyl groups).

In addition to the above, electron-withdrawing groups having a Hammett's σ p value of 0.45 or higher include acyl groups (such as acetyl groups), alkoxycarbonyl groups (such as dodecyloxycarbonyl groups), aryloxycarbonyl groups (such as m-chlorophenoxycarbonyl groups), alkylsulfinyl groups (such as n-propylsulfinyl groups), arylsulfinyl groups (such as phenylsulfinyl groups), sulfamoyl groups (such as N-ethylsulfamoyl groups and N,N-dimethylsulfamoyl groups), and halogenated alkyl groups (such as trifluoromethyl groups).

In addition to the above, electron-withdrawing groups having a Hammett' s substituent constant σ p value of 0.30 or higher include acyloxy groups (such as acetoxy groups), carbamoyl groups (such as N-ethylcarbamoyl groups and N,N-dibutylcarbamoyl groups), halogenated alkoxy groups (such as trifluoromethyloxy groups), halogenated aryloxy groups (such as pentafluorophenyloxy groups), sulfonyloxy groups (such as methylsulfonyloxy groups), halogenated alkylthio groups (such as difluoromethylthio groups), aryl groups substituted with two or more electron-withdrawing groups with sigmap values of 0.15 or higher (such as 2,4-dinitrophenyl groups and pentachlorophenyl groups), and heterocyclic groups (such as 2-benzooxazolyl groups, 2-benzothiazolyl groups, and 1-phenyl-2-benzimidazolyl groups).

In addition to the above, specific examples of electron-withdrawing groups having σ p values of 0.20 or higher include halogen atoms.

A preferred form of general formula (D11) is given by general formula (D111) below.

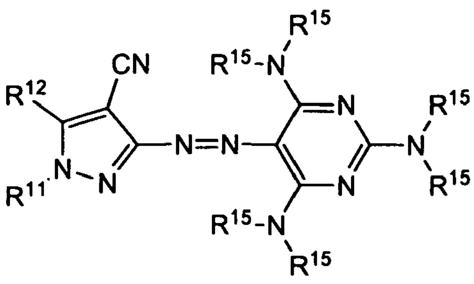

General formula (D111)

In general formula (D111), $R^{11}$ desirably denotes a 3-pyrazolyl group, 4-pyrazolyl group, 2-imidazolyl group, 4-imidazolyl group, 5-imidazolyl group, 2-oxazolyl group, 2-thiazolyl group, 2-benzoimidazolyl group, 2-benzooxazolyl group, 2-benzothiazolyl group, 2-pyridyl group, 3-pyridyl group, 4-pyridyl group, 2-quinolinyl group, 4-quinolinyl group, 1-isoquinolinyl group, 3-isoquinolinyl group, 3-pyrdazinyl group, 4-pyridazinyl group, 2-pyrimidinyl group, 4-pyrimidinyl group, 5-pyrimidinyl group, 2-pyrazinyl group, 2-purinyl group, 6-purinyl group, 8-purinyl group, 3-triazolyl group, 5-triazolyl group, 3-oxadiazolyl group, 5-oxadiazolyl group, 3-thiadiazolyl group, or 5-thiadiazolyl group. $R^{12}$ desirably denotes hydrogen atom, an alkyl group, an alkenyl group, an alkynyl group, cyano group, an aryl group, an acyloxy group, an alkyloxy group, an alkenyloxy group, an alkynyloxy group, an alkylsulfonyloxy group, an alkenylsulfonyloxy group, or an alkynylsulfonyloxy group. And each instance of $R^{15}$ desirably independently denotes hydrogen atom, an alkyl group, an alkenyl group, an aryl group, a heterocyclic group, an acyl group, an alkoxycarbonyl group, an aryloxycarbonyl group, a carbamoyl group, an alkylsulfonyl group, an arylsulfonyl group, or sulfamoyl group.

A preferred form of general formula (D12) is given by general formula (D121) below.

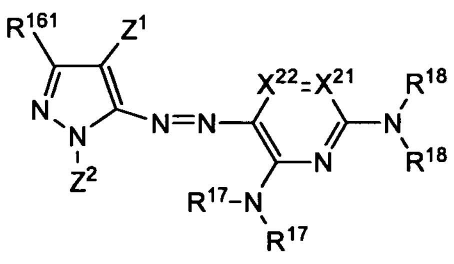

General formula (D121)

Desirable ranges are given below for each of the substituents.

(a) Each instance of $R^{17}$ independently desirably denotes hydrogen atom, an alkyl group, an aryl group, a heterocyclic group, an alkylsulfonyl group, an arylsulfonyl group, or an acyl group; preferably denotes hydrogen atom, an alkyl

group, an aryl group, a heterocyclic group, an alkylsulfonyl group, or an arylsulfonyl group; and more preferably denotes hydrogen atom, an alkyl group, an aryl group, or a heterocyclic group.

(b) Each instance of $R^{18}$ independently desirably denotes hydrogen atom, an alkyl group, an aryl group, a heterocyclic group, an alkylsulfonyl group, an arylsulfonyl group, or an acyl group; preferably denotes hydrogen atom, an alkyl group, an aryl group, a heterocyclic group, an alkylsulfonyl group, or an arylsulfonyl group; and more preferably denotes hydrogen atom, an alkyl group, an aryl group, or a heterocyclic group. However, no two instances of $R^{18}$ denote hydrogen atoms.

(c) $R^{161}$ desirably denotes hydrogen atom, an alkyl group, or an aryl group; and preferably denotes hydrogen atom or an alkyl group having 1 to 8 carbon atoms.

(d) $X^{21}$ desirably denotes -CH=, $-C(C_mH_{2m+1})=$, -C(CN)=, or -N=; and preferably denotes -CH=, -C(CN)=, or -N=. The variable m denotes an integer of from 1 to 20, desirably m=1 to 3.

(e) $X^{22}$ desirably denotes -CH=, $-C(C_mH_{2m+1})=$, or -C(CN)=; and preferably denotes -CH= or $-C(C_mH_{2m+1})=$. The variable m denotes an integer of from 1 to 20, desirably m=1 to 3.

(f) $Z^1$ desirably denotes a cyano group.

(g) $Z^2$ desirably denotes a monocyclic five-membered heterocyclic ring comprised of multiple atoms selected from among C, N, S, and O atoms; and preferably denotes a 1,2,4-thiazole ring, 1,3,4-thiazole ring, or 1,2,5-thiazole ring.

As a combination of desirable substituents in the compound denoted by general formula (D121), a compound having various substituents at least one of which is one of the desirable groups of (a) to (g) above is desirable. A compound having various substituents consisting of more of the desirable groups of (a) to (g) above is preferred. And a compound in which all of the substituents are desirable groups from among (a) to (g) above is most preferred.

The compound denoted by general formula (D12) may form a polymer (dimer, trimer, tetramer, or the like) by using any group as a linking group.

A preferred form of general formula (D13) is given by general formula (D131) below.

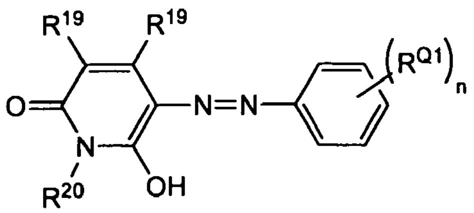

General formula (D131)

Each instance of $R^{19}$ independently desirably denotes hydrogen atom, a halogen atom, an aliphatic group, an aryl group, a heterocyclic group, cyano group, carboxyl group, a carbamoyl group, an aliphatic oxycarbonyl group, an aryloxycarbonyl group, an acyl group, hydroxy group, an aliphatic oxy group, an aryloxy group, an acyloxy group, a carbamoyloxy group, a heterocyclic oxy group, amino group, an aliphatic amino group, an arylamino group, a heterocyclic amino group, an acylamino group, a carbamoylamino group, sulfamoylamino group, an aliphatic oxycarbonylamino group, an aryloxycarbonylamino group, an aliphatic sulfonylamino group, an arylsulfonylamino group, nitro group, an aliphatic thio group, an arylthio group, an aliphatic sulfonyl group, an arylsulfonyl group, sulfamoyl group, sulfo group, an imide group, or a heterocyclic thio group; and preferably denotes an aliphatic group, an aryl group, a heterocyclic group, cyano group, a carbamoyl group, an aliphatic oxycarbonyl group, an aryloxycarbonyl group, an acyl group, an aliphatic oxy group, an aryloxy group, an aliphatic amino group, or an arylamino group. Each of these groups may be further substituted.

$R^{19}$ and $R^{20}$ may denote independent, optionally substituted, saturated or unsaturated, optionally cyclic aliphatic groups.

Examples include alkyl groups, substituted alkyl groups, alkenyl groups, substituted alkenyl groups, alkynyl groups, substituted alkynyl groups, aralkyl groups, and substituted aralkyl groups. These aliphatic groups desirably have 1 to 30, preferably 1 to 16, total carbon atoms. Specific examples of these aliphatic groups include methyl groups, ethyl groups, butyl groups, isopropyl groups, t-butyl groups, hydroxyethyl groups, methoxyethyl groups, cyanoethyl groups, trifluoromethyl groups, 3-sulfopropyl groups, 4-sulfobutyl groups, cyclohexyl groups, benzyl groups, 2-phenethyl groups, vinyl groups, and allyl groups.

Each of $R^{19}$ and $R^{20}$ may denote an optionally substituted aryl group desirably having 6 to 30, preferably 6 to 16, total carbon atoms. Examples include phenyl group, 4-tolyl group, 4-methoxyphenyl group, 2-chlorophenyl group, 3-(3-sulfopropylamino)phenyl group, 4-sulfamoyl group, 4-ethoxyethylsulfamoyl group, and 3-dimethylcarbamoyl group.

Each of $R^{19}$ and $R^{20}$ may denote a saturated or unsaturated heterocyclic group, including the aromatic heterocyclic group given below; the ring may contain hetero atoms such as nitrogen, sulfur, and oxygen atoms. Substituents may also be present. A heterocyclic group with 1 to 30 total carbon atoms is desirable, and a heterocyclic group with 1 to 15 total carbon atoms is preferred. Examples include 2-pyridyl group, 2-thienyl group, 2-thiazolyl group, 2-benzathioazolyl group, 2-benzooxazolyl group, and 2-furyl group. The term "aromatic heterocyclic group" refers to an aromatic ring comprising hetero atoms such as nitrogen, sulfur, and oxygen atoms, desirably a five- or six-membered ring. The aromatic heterocyclic group desirably comprises 1 to 25, preferably 1 to 15 carbon atoms. Examples of these aromatic heterocyclic groups include pyrazole group, 1,2,4-triazole group, isothiazole group, benzoisothiazole group, thiazole group, benzothiazole group, oxazole group, and 1,2,4-thiadiazole group.

A carbamoyl group denoted by $R^{19}$ or $R^{20}$ may be optionally substituted, and is preferred to be a carbamoyl group desirably having 1 to 30, preferably 1 to 16 total carbon atoms. Examples include methylcarbamoyl group, dimethylcarbamoyl group, phenylcarbamoyl group, and N-methyl-N-phenylcarbamoyl group.

An aliphatic oxycarbonyl group denoted by $R^{19}$ or $R^{20}$ is optionally substituted, saturated or unsaturated, an optionally cyclic aliphatic oxycarbonyl group desirably having 2 to 30, preferably 2 to 16, total carbon atoms. Examples include methoxycarbonyl group, ethoxycarbonyl group, and 2-methoxyethoxycarbonyl group.

An aryloxycarbonyl groups denoted by $R^{19}$ or $R^{20}$ is an optionally substituted aryloxycarbonyl group desirably having 7 to 30, preferably 7 to 16, total carbon atoms. Examples include phenoxycarbonyl group, 4-methylphenoxycarbonyl group, and 3-chlorophenoxycarbonyl group.

An aryloxy group denoted by $R^{19}$ or $R^{20}$ is an optionally substituted aryloxy group desirably having 6 to 30, preferably 6 to 16, total carbon atoms. Examples include phenoxy group, p-methoxyphenoxy group, and o-methoxyphenoxy group.

An acyloxy group denoted by $R^{19}$ or $R^{20}$ includes an aliphatic carbonyl group, an arylcarbonyl group, and a heterocyclic carbonyl group, desirably having 1 to 30, preferably 1 to 16, total carbon atoms. Examples include acetoxy group, nicotinoyl group, and benzoyloxy group.

A carbamoyloxy group denoted by $R^{19}$ or $R^{20}$ is optionally substituted and desirably has 1 to 30, preferably 1 to 16, total carbon atoms. Examples include N-methylcarbamoyloxy group, dimethylcarbamoyloxy group, and phenylcarbamoyloxy group.

In a heterocyclic oxy group denoted by $R^{19}$ or $R^{20}$, the hetero ring may be saturated or unsaturated. Substituents may be present, and the total number of carbon atoms of the heterocyclic oxy group is desirably 1 to 30, preferably 1 to 15. Examples include 2-pyridyloxy group, 2-thienyloxy group, 2-thiazolyloxy group, 2-benzathiazolyloxy group, 2-benzaoxazolyloxy group, and 2-furyloxy group.

An aliphatic amino group denoted by $R^{19}$ or $R^{20}$ is optionally substituted, saturated or unsaturated, an optionally cyclic aliphatic amino group desirably having 1 to 30, preferably 1 to 16, total carbon atoms. Examples include methylamino group, diethylamino group, bis-2-ethoxyethylamino group, and N-methyl-N-2-methoxyethylamino group.

An arylamino group denoted by $R^{19}$ or $R^{20}$ is optionally substituted and desirably has 6 to 30, preferably 6 to 16, total carbon atoms. Examples include anilino group and 4-methoxyphenylamino group.

A heterocyclic amino group denoted by $R^{19}$ or $R^{20}$ is optionally substituted, saturated or unsaturated, an optionally cyclic heterocyclic amino group desirably having 1 to 30, preferably 1 to 16, total carbon atoms. Examples include 2-pyridylamino group, 2-thienylamino group, 2-thiazolylamino group, and 2-benzothiazolylamino group.

An acylamino group denoted by $R^{19}$ or $R^{20}$ includes an aliphatic carbonylamino group, an arylcarbonylamino group, and a heterocyclic carbonylamino group. The acylamino group desirably has 2 to 30, preferably 2 to 16, total carbon atoms. Examples include acetylamino group, propionylamino group, benzoylamino group, N-phenylacetylamino group, and 3,5-disulfobenzoylamino group.

A carbamoylamino group denoted by $R^{19}$ or $R^{20}$ is optionally substituted and desirably comprises 1 to 30, preferably 1 to 16, total carbon atoms. Examples include dimethylcarbamoylamino group and phenylcarbamoylamino group.

An aryloxycarbonylamino group denoted by $R^{19}$ or $R^{20}$ is optionally substituted and desirably comprises 7 to 30, preferably 7 to 18, total carbon atoms. Examples include phenoxycarbonylamino group and 3-chlorophenoxycarbonylamino group.

An aliphatic sulfonylamino group denoted by $R^{19}$ or $R^{20}$ is optionally substituted, saturated or unsaturated, optionally cyclic, and desirably comprises 1 to 30, preferably 1 to 16, total carbon atoms. Examples include methanesulfonylamino group, N-phenylmethanesulfonylamino group, benzenesulfonylamino group, and 3-carboxybenzenesulfonylamino group.

An arylsulfonylamino group denoted by $R^{19}$ or $R^{20}$ is optionally substituted and desirably has 6 to 30, preferably 6 to 18, total carbon atoms. Examples include benzenesulfonylamino group and toluenesulfoneamino group.

An aliphatic thio group denoted by $R^{19}$ or $R^{20}$ is optionally substituted, saturated or unsaturated, optionally cyclic, and desirably has 1 to 30, preferably 1 to 16, total carbon atoms. Examples include methylthio group, t-butylthio group, and ethoxyethylthio group.

An arylthio group denoted by $R^{19}$ or $R^{20}$ is optionally substituted and desirably has 6 to 30, preferably 6 to 18,

total carbon atoms. Examples include phenylthio group and 4-methylphenylthio group.

In a heterocyclic thio group denoted by $R^{19}$ or $R^{20}$, the hetero ring is saturated or unsaturated and optionally substituted. The total number of carbon atoms as a heterocyclic oxy group is desirably 1 to 30, preferably 1 to 15. Examples include 2-pyridylthio group, 2-thienylthio group, 2-thiazolylthio group, 2-benzothiazolylthio group, 2-benzooxazolylthio group, and 2-furylthio group.

An aliphatic sulfonyl group denoted by $R^{19}$ or $R^{20}$ is optionally substituted, saturated or unsaturated, optionally cyclic, and desirably has 1 to 30, preferably 1 to 16 total carbon atoms. Examples include methanesulfonyl group, methoxymethanesulfonyl group, and ethoxyethanesulfonyl group.

An arylsulfonyl group denoted by $R^{19}$ or $R^{20}$ is optionally substituted and desirably has 6 to 30, preferably 6 to 18 total carbon atoms. Examples include benzenesulfonyl group and toluenesulfonyl group.

A sulfamoyl group denoted by $R^{19}$ or $R^{20}$ is optionally substituted and desirably has 0 to 30, preferably 0 to 16, total carbon atoms. Examples include sulfamoyl group, dimethylsulfamoyl group, and di-(2-hydroxyethyl)sulfamoyl group.

An Imide group denoted by $R^{19}$ or $R^{20}$ is desirably an optionally substituted imide group having a five- or six-membered ring. The imide group desirably has 4 to 30, preferably 4 to 20, total carbon atoms. Examples include succinimide and phthalimide groups.

The substituent denoted by $R^{Q1}$ can be any substitutable group, and is desirably halogen atom, an aliphatic group, an aryl group, a heterocyclic group, cyano group, a carboxyl group, a carbamoyl group, an aliphatic oxycarbonyl group, an aryloxycarbonyl group, an acyl group, hydroxy group, an aliphatic oxy group, an aryloxy group, an acyloxy group, a carbamoyloxy group, a heterocyclic oxy group, an amino group, an aliphatic amino group, an arylamino group, a heterocyclic amino group, an acylamino group, a carbamoylamino group, a sulfamoylamino group, an aliphatic oxycarbonylamino group, an aryloxycarbonylamino group, an aliphatic sulfonylamino group, an arylsulfonylamino group, nitro group, an aliphatic thio group, an arylthio group, an aliphatic sulfonyl group, an arylsulfonyl group, a sulfamoyl group, sulfo group, an imide group, or a heterocyclic thio group; preferably a halogen atom, an aliphatic group, an aryl group, cyano group, a carbamoyl group, a heterocyclic group, an aliphatic oxycarbonyl group, an aliphatic sulfonyl group, an arylsulfonyl group, a sulfamoyl group, sulfo group, nitro group, or an aliphatic thio group. Each group may be further substituted. The variable n denotes an integer of 0 to 5, desirably 0 to 3, and preferably 0 to 2.

Preferred forms of the structure of (D2) are given by general formulas (D21) and (D22) below.

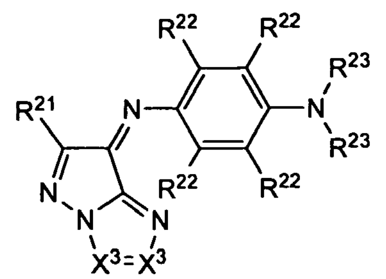

General formula (D21)

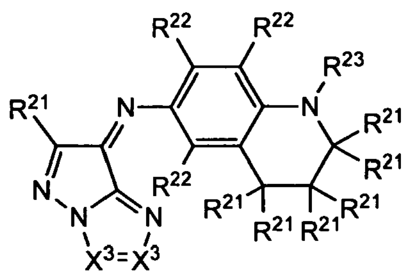

General formula (D22)

In general formulas (D21) and (D22), $R^{21}$ denotes hydrogen atom or a substituent, and each instance of $R^{22}$ independently denotes hydrogen atom or a substituent. Each instance of $R^{23}$ independently denotes an alkyl group, an alkenyl group, an aryl group, or a heterocyclic group. Each instance of $X^3$ independently denotes -N= or -C($R^{25}$)=, where $R^{25}$ denotes hydrogen atom, an alkyl group, an alkenyl group, an aryl group, or a heterocyclic group. $R^{22}$ and $R^{23}$ may be bonded together to form a five- to seven-membered ring.

The form given by general formula (23) below is desirable.

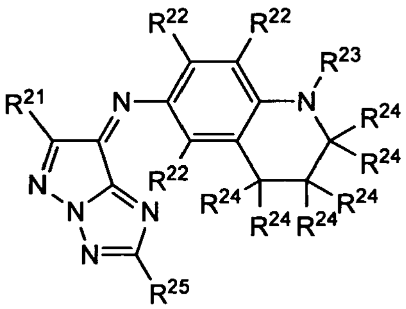

General formula (D23)

General formula (D23) is desirably an azomethine pigment in which: $R^{21}$ denotes an alkyl group, an alkenyl group, an aryl group, a heterocyclic group, hydroxyl group, cyano group, an alkoxy group, an aryloxy group, a heterocyclic oxy group, a carbamoyloxy group, an acyl group, an alkoxycarbonyl group, an aryloxycarbonyl group, a carbamoyl group, an imide group, an azo group, an alkylthio group, an arylthio group, a heterocyclic thio group, an alkylsulfinyl group, an arylsulfinyl group, an alkylsulfonyl group, an arylsulfonyl group, a sulfamoyl group, sulfo group, an phosphonyl group, or a phosphinoylamino group; each instance of $R^{22}$ independently denotes hydrogen atom, a halogen atom, an alkyl group, an alkenyl group, an aryl group, a heterocyclic group, an alkoxy group, an aryloxy group, an alkoxycarbonyl group, a carbamoyl group, amino group, anilino group, a carbonamide group, ureido group, an alkoxycarbonylamino group, a sulfonamide group, a sulfamoylamino group, azo group, an alkylthio group, an arylthio group, a heterocyclic thio group, an alkylsulfinyl group, an arylsulfinyl group, an alkylsulfonyl group, an arylsulfonyl group, a sulfamoyl group, sulfo group, a phosphonyl group, or a phosphinoylamino group; $R^{23}$ denotes an alkyl group, an alkenyl group, an aryl group, or a heterocyclic group; wach instance of $R^{24}$ independently denotes hydrogen atom, a halogen atom, an alkyl group, or an alkoxy group; and $R^{25}$ denotes hydrogen atom, an alkyl group, an alkenyl group, an aryl group, or a heterocyclic group.

An azomethine pigment is most preferred in which: $R^{21}$ denotes a tertiary alkyl group; each instance of $R^{22}$ independently denotes hydrogen atom, a halogen atom, an alkyl group, or an alkoxy group; $R^{23}$ denotes an alkyl group; $R^{24}$ denotes hydrogen atom or an alkyl group; and $R^{25}$ denotes an alkyl group, an alkenyl group, an aryl group, or a heterocyclic group.

Desirable forms of the structure denoted by (D3) are given by general formulas (D31) and (D32) below.

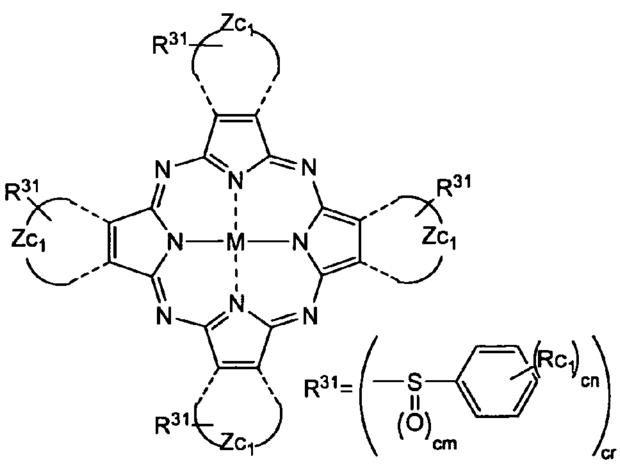

General formula (D31)

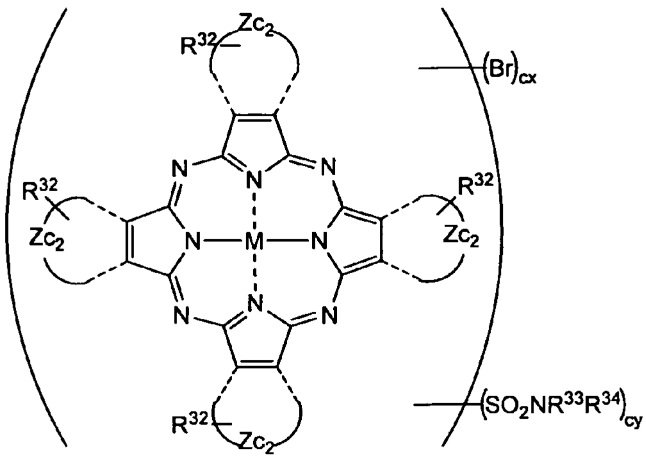

General formula (D32)

In general formula (D31), $Rc_1$ denotes a halogen atom, an aliphatic group, an aryl group, a heterocyclic group, cyano group, carboxyl group, a carbamoyl group, an aliphatic oxycarbonyl group, an aryloxycarbonyl group, an acyl group, hydroxy group, an aliphatic oxy group, an aryloxy group, an acyloxy group, a carbamoyloxy group, a heterocyclic oxy group, an aliphatic oxycarbonyloxy group, an N-alkylacylamino group, a carbamoylamino group, a sulfamoylamino group, an aliphatic oxycarbonylamino group, an aryloxycarbonylamino group, an aliphatic sulfonylamino group, an arylsulfonylamino group, an aliphatic thio group, an arylthio group, an aliphatic sulfonyl group, an arylsulfonyl group, a sulfamoyl group, sulfo group, an imide group, or a heterocyclic thio group. $Zc_1$ denotes a group of nonmetal atoms required to form a six-membered ring with the carbon atoms bonded to $Zc_1$. Each of the four instances of $Zc_1$ may be identical or different. The variable M denotes two hydrogen atoms, a divalent metal atom, a divalent metal oxide, a divalent metal hydroxide, or a divalent metal chloride. The variable cm denotes 0, 1, or 2. The variable cn denotes 0 or an integer from 1 to 5. The instances of cn in $R^{31}$ may be identical or different. However, one of the instances of cn denotes an integer from 1 to 5; the multiple instances of $Rc_1$ in the molecule may be identical or different. The variable cr denotes 0 or 1; in the four instances of $R^{31}$ in the molecule, at least one instance of cr denotes 1.

In general formula (D32), each instance of $Zc_2$ independently denotes the formation of a benzene ring or a pyridine ring with a carbon atom; at least one instance of $Zc_2$ denotes the formation of a pyridine ring. M denotes two hydrogen atoms, a divalent metal atom, a divalent metal oxide, a divalent metal hydroxide, or a divalent metal chloride. Each of $R^{33}$ and $R^{34}$ independently denotes a hydrogen atom or a substituted or unsubstituted alkyl group. However, $R^{33}$ and $R^{34}$ do not both simultaneously denote hydrogen atoms. The variable cx denotes an integer from 1 to 8; -(Br) can be substituted at any position denoted by $R^{32}$. The variable cy denotes an integer from 1 to 4; $-(SO_2NR^{33}R^{34})$ can be substituted at any position denoted by $R^{32}$. One instance of $Zc_2$ can be substituted at two or more instances of $R^{32}$; however, there is desirably one instance of $R^{32}$ substituted with one instance of $Zc_2$.

Among the dyes denoted by general formula (D31), a desirable form is given by general formula (D311) below.

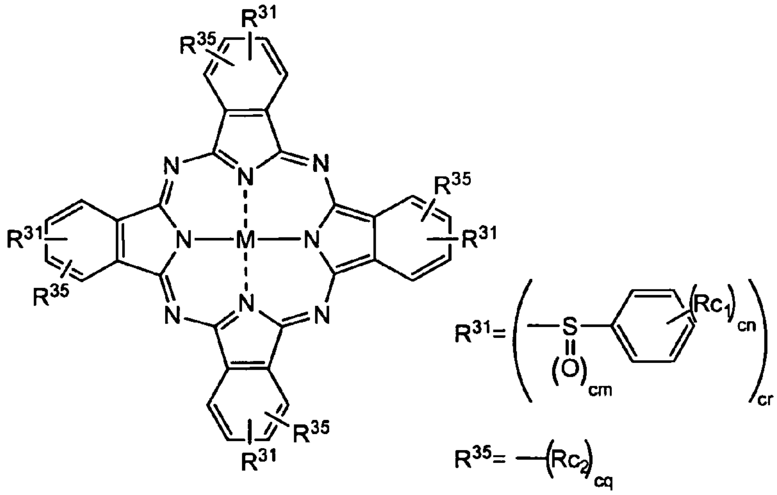

General formula (D311)

$Rc_1$ denotes a halogen atom, an aliphatic group, an aryl group, a heterocyclic group, cyano group, carboxyl group, a carbamoyl group, an aliphatic oxycarbonyl group, an aryloxycarbonyl group, an acyl group, hydroxy group, an aliphatic oxy group, an aryloxy group, an acyloxy group, a carbamoyloxy group, a heterocyclic oxy group, an aliphatic oxycarbonyloxy group, an N-alkylacylamino group, a carbamoylamino group, a sulfamoylamino group, an aliphatic oxycarbonylamino group, an aryloxycarbonylamino group, an aliphatic sulfonylamino group, an arylsulfonylamino group, an aliphatic thio group, an arylthio group, an aliphatic sulfonyl group, an arylsulfonyl group, a sulfamoyl group, sulfo group, an imide group, or a heterocyclic thio group.

Examples of halogen atoms denoted by $Rc_1$ in general formula (D31) or (D311) include fluorine, chlorine, and bromine atoms.

An aliphatic group denoted by $Rc_1$ may be substituted or unsubstituted, saturated or unsaturated, is optionally cyclic, and desirably has 1 to 15 total carbon atoms. Examples include methyl group, ethyl group, vinyl group, allyl group, ethynyl group, isopropenyl group, and 2-ethylhexyl group.

An aryl group denoted by $Rc_1$ may be substituted or unsubstituted, and desirably has 6 to 16, preferably 6 to 12, total carbon atoms. Examples include phenyl group, 4-nitrophenyl group, 2-nitrophenyl group, 2-chlorophenyl group, 2,4-dichlorophenyl group, 2,4-dimethylphenyl group, 2-methylphenyl group, 4-methoxyphenyl group, 2-methoxyphenyl group, and 2-methoxycarbonyl-4-nitrophenyl group.

A heterocyclic group denoted by $Rc_1$ may be saturated or unsaturated, and desirably has 1 to 15, preferably 3 to 10, total carbon atoms. Examples include 3-pyridyl group, 2-pyridyl group, 2-pyrimidinyl group, 2-pyrazinyl group, and 1-piperidyl group. Further substituents may also be present.

A carbamoyl group denoted by $Rc_1$ may be substituted or unsubstituted and desirably has 1 to 16, preferably 1 to 12, total carbon atoms. Examples include carbamoyl group, dimethylcarbamoyl group, and dimethoxyethylcarbamoyl group.

An aliphatic oxycarbonyl group denoted by $Rc_1$ may be substituted or unsubstituted, may be saturated or unsaturated, is optionally cyclic, and desirably has 2 to 16, preferably 2 to 10, total carbon atoms. Examples include methoxycarbonyl group and butoxycarbonyl group.

An aryloxycarbonyl group denoted by $Rc_1$ may be substituted or unsubstituted and desirably has 7 to 17, preferably 7 to 15, total carbon atoms. Examples include phenoxycarbonyl group.

An acyl group denoted by $Rc_1$ may be an aliphatic carbonyl group or an arylcarbonyl group. When an aliphatic carbonyl group, it may be further substituted, and when an arylcarbonyl group, it may be further substituted, may be saturated or unsaturated, and is optionally cyclic. The acyl group desirably has 2 to 15, preferably 2 to 10, total carbon atoms. Examples include acetyl group, pivaloyl group, and benzoyl group. Further substituents may also be present.

An aliphatic oxy group denoted by $Rc_1$ may be substituted or unsubstituted, may be saturated or unsaturated, and is optionally cyclic. An aliphatic oxy group having 1 to 12 total carbon atoms is desirable, and that having 1 to 10 total carbon atoms is preferred. Examples include methoxy group, ethoxyethoxy group, phenoxyethoxy group, and thiophenoxyethoxy group.

An aryloxy group denoted by $Rc_1$ may be substituted or unsubstituted, desirably has 6 to 18 total carbon atoms, and preferably has 6 to 14 total carbon atoms. Examples include phenoxy group and 4-methylphenoxy group.

An acyloxy group denoted by $Rc_1$ may be substituted or unsubstituted and desirably has 2 to 14 total carbon atoms, preferably 2 to 10 total carbon atoms. Examples include acetoxy group, methoxyacetoxy group, and benzoyloxy group.

A carbamoyloxy group denoted by $Rc_1$ may be substituted or unsubstituted and desirably has 1 to 16 total carbon atoms, preferably 1 to 12 total carbon atoms. Examples include dimethylcarbamoyloxy group and diisopropylcarbamoyloxy group.

A heterocyclic oxy group denoted by $Rc_1$ may be substituted or unsubstituted and desirably has 1 to 15 total carbon atoms, preferably 3 to 10 total carbon atoms. Examples include 3-furyloxy group, 3-pyridyloxy group, and N-methyl-2-piperidyloxy group.

An aliphatic oxycarbonyloxy group denoted by $Rc_1$ may be substituted or unsubstituted, may be saturated or unsaturated, and is optionally cyclic. An aliphatic oxycarbonyloxy group having 2 to 16 total carbon atoms is desirable, and an aliphatic oxycarbonyloxy group having 2 to 10 total carbon atoms is preferred. Examples include methoxycarbonyloxy groups and t-butoxycarbonyloxy group.

An N-alkylacylamino group denoted by $Rc_1$ may be substituted or unsubstituted and desirably has 3 to 15, preferably 3 to 12, total carbon atoms. Examples include N-methylacetylamino group, N-ethoxyethylbenzoylamino group, and N-methylmethoxyacetylamino group.

A carbamoylamino group denoted by $Rc_1$ may be substituted or unsubstituted and desirably have 1 to 16, preferably 1 to 12, total carbon atoms. Examples include N,N-dimethylcarbamoylamino group and N-methyl-N-methoxyethylcarbamoylamino group.

A sulfamoylamino group denoted by $Rc_1$ may be substituted or unsubstituted and desirably has 0 to 16, preferably 0 to 12, total carbon atoms. Examples include N,N-dimethylsulfamoylamino group and N,N-diethylsulfamoylamino group.

An aliphatic oxycarbonylamino group denoted by $Rc_1$ may be substituted or unsubstituted and desirably has 2 to 15, preferably 2 to 10, total carbon atoms. Examples include methoxycarbonylamino group and methoxyethoxycarbonylamino group.

An aryloxycarbonylamino group denoted by $Rc_1$ may be substituted or unsubstituted and desirably has 7 to 17, preferably 7 to 15, total carbon atoms. Examples include phenoxycarbonylamino group and 4-methoxycarbonylamino group.

An aliphatic sulfonylamino group denoted by $Rc_1$ may be substituted or unsubstituted, may be saturated or unsaturated, and is optionally cyclic. An aliphatic sulfonylamino group having 1 to 12 total carbon atoms is desirable, and an aliphatic sulfonylamino group having 1 to 8 total carbon atoms is preferred. Examples include methanesulfonylamino group and butanesulfonylamino group.

An arylsulfonylamino group denoted by $Rc_1$ may be substituted or unsubstituted and desirably has 6 to 15, preferably 6 to 12, total carbon atoms. Examples include benzenesulfonylamino group and 4-toluenesulfonylamino group.

An aliphatic thio group denoted by $Rc_1$ may be substituted or unsubstituted, may be saturated or unsaturated, and is optionally cyclic. An aliphatic thio group having 1 to 16 total carbon atoms is desirable and an aliphatic thio group having 1 to 10 total carbon atoms is preferred. Examples include methylthio group, ethylthio group, and ethoxyethylthio group.

An arylthio groups denoted by $Rc_1$ may be substituted or unsubstituted and desirably has 6 to 22, preferably 6 to 14, total carbon atoms. Examples include phenylthio group and 2-t-butylthio group.

An aliphatic sulfonyl group denoted by $Rc_1$ may be substituted or unsubstituted and desirably has 1 to 15, preferably 1 to 8, total carbon atoms. Examples include methanesulfonyl group, butanesulfonyl group, and methoxyethanesulfonyl group.

An arylsulfonyl group denoted by $Rc_1$ may be substituted or unsubstituted and desirably has 6 to 16, preferably 6 to 12, total carbon atoms. Examples include benzenesulfonyl group, 4-t-butylbenzenesulfonyl group, 4-toluenesulfonyl group, and 2-toluenesulfonyl group.

A sulfamoyl group denoted by $Rc_1$ may be substituted or unsubstituted and desirably has 0 to 16, preferably 0 to 12, total carbon atoms. Examples include sulfamoyl group and dimethylsulfamoyl group.

An imide group denoted by $Rc_1$ may be further condensed and desirably have 3 to 22, preferably 3 to 15, total carbon atoms. Examples include succinimide group and phthalimide group.

A heterocyclic thio group denoted by $Rc_1$ may be substituted or unsubstituted, is five- to seven-membered, and desirably has 1 to 20, preferably 1 to 12, total carbon atoms. Examples include 3-furylthio group and 3-pyridylthio group.

Examples of M in general formula (D31) and (D311) include: VO, TiO, Zn, Mg, Si, Sn, Rh, Pt, Pd, Mo, Mn, Pb, Cu, Ni, Co, Fe, AlCl, InCl, FeCl, $TiCl_2$, $SnCl_2$, $SiCl_2$, $GeCl_2$, $Si(OH)_2$, and $H_2$. VO, Zn, Mn, Cu, Ni, or Co is desirable.

In general formula (D311), $Rc_2$ denotes a substituent, desirably an aliphatic group, an aryl group, a heterocyclic group, an N-alkylacylamino group, an aliphatic oxy group, an aryloxy group, a heterocyclic oxy group, an aliphatic oxycarbonyl group, an aryloxycarbonyl group, a heterocyclic oxycarbonyl group, a carbamoyl group, an aliphatic sulfonyl

group, a sulfamoyl group, an aliphatic sulfonamide group, an arylsulfonamide group, an aliphatic amino group, an arylamino group, an aliphatic oxycarbonylamino group, an aryloxycarbonylamino group, an aliphatic thio group, an arylthio group, hydroxy group, cyano group, sulfo group, carboxyl group, a carbamoylamino group, a sulfamoylamino group, or a halogen atom; and preferably denotes an aliphatic group, an N-alkylacylamino group, an aliphatic oxy group, an aliphatic oxycarbonyl group, an aliphatic sulfonyl group, an aliphatic thio group, an arylthio group, sulfo group, carboxyl group, or a halogen atom.

In general formula (D31) and (D311), cm desirably denotes 0 and cn desirably denotes 1. The sum of the instances of cr in the four instances of $R^{31}$ in the molecule is desirably 3 or 4.

Among dyes denoted by general formula (D32), the unsubstituted alkyl group in the substituents denoted by $R^{33}$ and $R^{34}$ desirably has 1 to 12 carbon atoms. Examples include linear and branched alkyl groups in the form of methyl group, ethyl group, n-propyl group, isopropyl group, n-butyl group, isobutyl group, n-hexyl group, 2-ethylhexyl group, n-octyl group, and n-dodecyl group. Of these, a linear and branched alkyl group having 4 to 12 carbon atoms is desirable.

A substituted alkyl group comprising an oxygen atom in the form of at least one ether bond, carbonyl bond, or ester bond is desirable as the substituted alkyl group denoted by $R^{33}$ or $R^{34}$. A linear, branched, or cyclic substituted alkyl group comprising 2 to 12 carbon atoms and 1 to 4 oxygen atoms in at least one of the above forms is desirable. Examples include methoxymethyl group, ethoxymethyl group, butoxymethyl group, methoxyethyl group, ethoxyethyl group, 3-methoxypropyl group, 3-ethoxypropyl group, 3-butoxypropyl group, methoxyethoxyethyl group, ethoxyethoxyethyl group, butoxyethoxyethyl group, methoxyethoxyethoxyethyl group, ethoxyethoxyethoxyethyl group, butoxyethoxyethoxyethyl group, acetylmethyl group, acetylethyl group, propionylmethyl group, propionylethyl group, acetylmethyl group, acetylethyl group, propionylmethyl group, propionylethyl group, tetrahydrofurfuryloxymethyl group, 2,2-dimethyl-1,3-dioxolane-4-methoxymethyl group, 2-(1,3-dioxolane)ethoxymethyl group, 2-(1,3-dioxane)ethoxymethyl group, methoxycarbonylmethyl group, ethoxycarbonylethyl group, propoxycarbonylethyl group, butoxycarbonylethyl group, pentoxycarbonylbutyl group, 1-(butoxymethyl)ethyl group, 1-(methoxymethyl)propyl group, 1-(ethoxymethyl)propyl group, 1-(butoxymethyl)propyl group, 1-(2-methoxyethoxymethyl)propyl group, 1-(2-ethoxyethoxymethyl)propyl group, 1-(2-methoxy-2-ethoxy-2-ethoxymethyl)ethyl group, 1-(2-ethoxy-2-ethoxy-2-ethoxymethyl)ethyl group, 1-(2-butoxy-2-ethoxy-2-ethoxymethyl)ethyl group, 1-(2methoxy-2-ethoxy-2-ethoxymethyl)propyl group, 1-(2-ethoxy-2-ethoxy-2-ethoxymethyl)propyl group, 1-(2-propoxy-2-ethoxy-2-ethoxymethyl)propyl group, 1-(2-butoxy-2-ethoxy-2-ethoxymethyl) propyl group, 1-(2-methoxy-2-ethoxy-2-ethoxymethyl)butyl group, 1-(2-ethoxy-2-ethoxy-2-ethoxymethyl)butyl group, 1-(2-propoxy-2-ethoxy-2-ethoxymethyl)butyl group, 1-(2-methoxy-2-ethoxy-2-ethoxymethyl)pentyl group, 1-(2-ethoxy-2-ethoxy-2-ethoxymethyl)pentyl group, 1-(2-methoxy-2-ethoxy-2-ethoxy-2-ethoxymethyl)ethyl group, 1-(2-ethoxy-2-ethoxy-2-ethoxy-2-ethoxymethyl)ethyl group, 1-(2-methoxy-2-ethoxy-2-ethoxy-2-ethoxymethyl)propyl group, 1-(2-ethoxy-2-ethoxy-2-ethoxy-2-ethoxymethyl)propyl group, 1-(2-methoxy-2-ethoxy-2-ethoxy-2-ethoxymethyl)butyl group, 1-(2-methoxy-2-ethoxy-2-ethoxy-2-ethoxyethyl)ethyl group, 1-(2-ethoxy-2-ethoxy-2-ethoxy-2-ethoxyethyl)ethyl group, 1-(2-methoxy-2-ethoxy-2-ethoxy-2-ethoxyethyl)propyl group, 1,1-di(methoxymethyl)methyl group, 1,1-di(ethoxymethyl) methyl group, 1,1-di(propoxymethyl)methyl group, 1,1-di(butoxymethyl)methyl group, 1,1-di(2-methoxyethoxymethyl) methyl group, 1,1-di(2-ethoxyethoxymethyl)methyl group, 1,1-di(2-propoxyethoxymethyl)methyl group, and 1,1-di(2-butoxyethoxymethyl)methyl group.

Each of $R^{33}$ and $R^{34}$ independently desirably denotes hydrogen atom (where $R^{33}$ and $R^{34}$ do not simultaneously denote hydrogen atoms), an unsubstituted alkyl group, or "a substituted alkyl group containing an oxygen atom in the form of at least one ether bond, carbonyl bond, or ester bond."

Of the above, a form in which each of $R^{33}$ and $R^{34}$ independently denotes hydrogen atom (where $R^{33}$ and $R^{34}$ do not simultaneously denote hydrogen atoms), unsubstituted alkyl group with 1 to 12 carbon atoms, or a "substituted alkyl group, having 2 to 12 carbon atoms, containing 1 to 4 oxygen atoms in the form of at least one ether bond, carbonyl bond, or ester bond" is preferred. A form in which at least one $R^{33}$ or $R^{34}$ denotes a "substituted alkyl group, having 2 to 12 carbon atoms, containing 1 to 4 oxygen atoms in the form of at least one ether bond, carbonyl bond, or ester bond" is desirable in that solubility in polar organic solvents is high.

A form in which at least one $R^{33}$ or $R^{34}$ denotes a "substituted alkyl group, having 2 to 12 carbon atoms, containing 1 to 4 oxygen atoms in the form of at least one ether bond, carbonyl bond, or ester bond" is desirable, and in which it is desirable for at least one $R^{33}$ or $R^{34}$ to denote a substituted alkyl group represented by general formula (A) below.

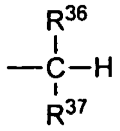

General formula (A)

In general formula (A), each of $R^{36}$ and $R^{37}$ independently denotes hydrogen atom, an unsubstituted alkyl group, an "alkyl group containing an oxygen atom in the form of at least one ether bond, carbonyl bond, or ester bond," an alkylcarbonyl group, or an alkoxycarbonyl group. However, at least one $R^{36}$ or $R^{37}$ denotes an "alkyl group containing an oxygen atom in the form of at least one ether bond, carbonyl bond, or ester bond," an alkylcarbonyl group, or an alkoxycarbonyl group.

An unsubstituted alkyl group denoted by $R^{36}$ and $R^{37}$ is desirably an alkyl group having 1 to 8 carbon atoms, such as methyl group, ethyl group, propyl group, isopropyl group, butyl group, isobutyl group, pentyl group, hexyl group, or octyl group.

A "substituted alkyl group containing an oxygen atom in the form of at least one ether bond, carbonyl bond, or ester bond" denoted by $R^{36}$ or $R^{37}$ is desirably a substituted alkyl group having 2 to 10 carbon atoms and containing 1 to 4 oxygen atoms. Examples include: methoxymethyl group, ethoxymethyl group, propoxymethyl group, butoxymethyl group, methoxyethoxymethyl group, ethoxyethoxymethyl group, propoxyethoxymethyl group, butoxyethoxymethyl group, methoxyethoxyethoxymethyl group, ethoxyethoxyethoxymethyl group, propoxyethoxyethoxymethyl group, butoxyethoxyethoxymethyl group, methoxyethoxyethoxyethoxymethyl group, ethoxyethoxyethoxyethoxymethyl group, propoxyethoxyethoxyethoxymethyl group, butoxyethoxyethoxyethoxymethyl group, acetylmethyl group, propionylmethyl group, tetrahydrofurfuryloxymethyl group, 2,2-dimethyl-1,3-dioxolane-4-methoxymethyl group, 2-(1,3-dioxolane) ethoxymethyl group, 2-(1,3-dioxane)ethoxymethyl group, methoxycarbonylmethyl group, ethoxycarbonylmethyl group, propoxycarbonylmethyl group, butoxycarbonylmethyl group, and pentoxycarbonylmethyl group.

An alkylcarbonyl group or an alkoxycarbonyl group denoted by $R^{36}$ or $R^{37}$ is desirably an alkylcarbonyl group having 2 to 10 total carbon atoms or an alkoxycarbonyl group having 2 to 10 total carbon atoms. Examples include acetyl group, propionyl group, propylcarbonyl group, methoxycarbonyl group, ethoxycarbonyl group, propoxycarbonyl group, butoxycarbonyl group, and pentoxycarbonyl group.

In general formula (D32), cx denotes an integer of 1 to 8, desirably an integer of 1 to 6, and preferably, with a view to high absorbance, an integer of 1 to 4. Further, cy denotes an integer of 1 to 4, desirably 2 or 3, and preferably 2.

It suffices to add the absorptive material that is selected so that the above-described transmittance at the maximum absorption wavelength of the optically anisotropic layer containing the absorptive material is 30 percent or lower. When the optically anisotropic layer is formed of a composition comprising a liquid crystalline compound, it generally suffices to incorporate the absorptive material in a proportion of 5 to 50 weight percent, desirably 10 to 35 weight percent, of the total material forming the colored optically anisotropic layer.

Using optical materials having regions in which absorptive materials are employed to achieve R, G, and B coloration or using optical materials having regions in which absorptive materials are employed to achieve cyan, magenta, and yellow coloration permits the fabrication of a color filter that can be advantageously employed in a liquid-crystal display device.

To fabricate the above regions, for example, it is possible to employ a photolithographic method employing a developing process having patterning exposure steps based on masks, such as is described by Shunsuke Kobayashi, ed., Color Liquid-Crystal Displays, Sangyo Tosho, 1990, pp. 241-243, or a printing method without a developing step, such as screen printing or inkjet printing.

Fabrication of a color filter by the photolithographic method is generally conducted as follows. However, the method of fabricating the color filter of the present invention is not necessarily limited to the following:

1. Washing a transparent substrate of glass, plastic film, or the like.
2. Evenly applying black matrix-use resist solution onto the transparent substrate by spin coating, slit coating, or the like.
3. Conducting a patterned exposure of ionizing radiation such as ultraviolet radiation by using a photomask.
4. Using a developing solution in the form of an organic solvent such as an alkali aqueous solution or alcohol. When the resist solution is of the negative type, unexposed portions dissolve in the developing solution, and when of the positive type, exposed portions dissolve in the developing solution, forming a pattern.
5. Baking each substrate and causing it to adequately cure.
6. In a number of cycles equal to the number of required colors, such as R, G, and B, a color filter-use resist solution is applied in the same manner as the black matrix-use resist solution to conduct a patterned exposure and developing,

and bake the substrate.

7. Finally, post-baking is conducted and unpolymerized components and low-molecular-weight components are removed.

In the present invention, a composition such as that given below is desirable as the resist solution employed in the photolithographic method (percentages indicate percentages by weight):

1. Polymerizable liquid crystalline compound: 5 to 50 percent (desirably 10 to 40 percent)
2. Non liquid crystalline monomer: 0 to 30 percent (desirably 2 to 10 percent)
3. The above absorptive compound: 5 to 50 percent (desirably 10 to 40 percent)
4. Alkali-soluble polymer containing acrylic acid or the like in a copolymer composition: 3 to 40 percent (desirably 5 to 30 percent)
5. Photopolymerization initiator: 0.1 to 20 percent (desirably 1 to 8 percent)
6. Surfactant: 0.0001 to 3 percent (desirably 0.001 to 2 percent)
7. Solvent: 30 to 90 percent (desirably 50 to 80 percent)

Fabrication of a color filter by the inkjet method is generally conducted as set forth below. However, the method of fabricating the color filter of the present invention is not necessarily limited to the following:

1. Washing a transparent substrate of glass, plastic film, or the like.
2. Evenly applying black matrix-use resist solution onto the transparent substrate by spin coating, slit coating, or the like.
3. Conducting a patterned exposure of ionizing radiation such as ultraviolet radiation by using a photomask.
4. Using a developing solution in the form of an organic solvent such as an alkali aqueous solution or alcohol. When the resist solution is of the negative type, unexposed portions dissolve in the developing solution, and when of the positive type, exposed portions dissolve in the developing solution, forming a pattern.
5. Baking each substrate and causing it to adequately cure.
6. Treating the surface of the black matrix with fluorine plasma to render it water-repellent. In this process, portions of the glass surface that are not covered by black matrix are not rendered water repellent.
7. Applying patterns of R, G, B inkjet-use ink with an inkjet printer. Normally, the amount of variation per droplet is reduced by applying droplets 5 to 20 times per pixel.
8. When employing a photosetting ink, the entire surface can be exposed as necessary.
9. Finally, post-baking is conducted and unpolymerized components and low-molecular-weight components are removed.

In the present invention, the ink employed in the inkjet method desirably has a composition such as the following (percentages indicate percentages by weight):

1. Polymerizable liquid crystalline compound: 5 to 50 percent (desirably 10 to 40 percent)
2. Non liquid crystalline monomer: 0 to 30 percent (desirably 2 to 10 percent)
3. The above absorptive compound: 5 to 50 percent (desirably 10 to 40 percent)
4. Alkali-soluble polymer containing acrylic acid or the like in a copolymer composition: 3 to 40 percent (desirably 5 to 30 percent)
5. Photopolymerization initiator: 0 to 20 percent (desirably 0.5 to 3 percent)
6. Surfactant: 0.0001 to 3 percent (desirably 0.001 to 2 percent)
7. Solvent: 30 to 90 percent (desirably 50 to 80 percent)

The viscosity of the ink during spraying is desirably 5 to 25 mPa·s, preferably 8 to 22 mPa·s, and more preferably, 10 to 20 mPa·s. A surface tension during ink spraying of 15 to 40 mN/m is desirable from the perspective of enhancing flatness of the pixels.

Various inkjet methods can be employed, such as continuously spraying charged inkjet ink and controlling it with an electric field, employing piezoelectric elements to intermittently spray ink, and intermittently spraying the ink by heating the ink to generate bubbles. As inkjet ink-spraying conditions that are desirable from the perspective of stable spraying, the inkjet ink may be heated to 30 to 60°C to lower the viscosity of the ink, and the ink may be sprayed. Inkjet ink is generally of higher viscosity than water-based ink, so the range of viscosity variation due to temperature variation is large. Viscosity variation greatly affects ink droplet size and the ink droplet spraying rate, tending to negatively affect picture quality. Thus, it is important to keep the temperature of inkjet ink as constant as possible.

A known inkjet head (referred to simply as a "head" hereinafter) can be employed, either in the form of a

continuous type or dot-on-demand type head. Among dot-on-demand type heads, in the domain of thermal heads, a head having an operating valve such as that described in Japanese Unexamined Patent Publication (KOKAI) Heisei No. 9-323420 is desirable for discharging. In the domain of piezo heads, for example, the head described in European Patent No. A277,703 or A278,590 can be employed. Of these, the piezo heads are preferred because the inkjet ink is less affected by heat and such heads permit the use of a wider selection of organic solvents. Heads having a temperature-regulating function permitting control of the ink temperature are desirable. Setting a discharge temperature yielding a viscosity during discharge of 5 to 25 mPa·s and controlling the ink temperature so that the range of viscosity variation is within ± 5 percent are desirable. Operation at a drive frequency of 1 to 500 kHz is desirable. The nozzle does not necessarily have to be round in shape, but may be oblong, square, or the like in shape. A nozzle diameter falling within a range of 10 to 100 micrometers is desirable. Further, the openings in the nozzle do not necessarily have to be perfectly round. In this case, the term "nozzle diameter" refers to the diameter of a hypothetical circle with an area equivalent to that of the openings.

Since the colored optically anisotropic layer in the optical material of the present invention is employed in a liquid-crystal display device, it desirably has a haze of 5.0 percent or lower. The haze can be measured in accordance with JIS-K7136. Achieving a colored optically anisotropic layer with a haze of 5.0 percent or lower requires increasing the compatibility with the liquid crystalline compound in the case of an absorptive material, and requires adequately reducing the particle size in the case of a nanopigment. Specifically, the blending ratio of absorptive material and liquid crystalline compound can be varied to determine the optimal blending ratio from phase transition behavior. Further, one method that does not result in loss of liquid-crystalline properties is that of using dichroic pigment to cholesterically orient the liquid crystals. In that case, the cholesteric structure of a cholesteric orientation layer can be distorted to achieve in-plane retardation by the method described in Japanese Unexamined Patent Publication (KOKAI) No. 2006-171382.

The colored optically anisotropic layer in the optical material of the present invention desirably has high heat resistance, since it is employed in a liquid-crystal display device the manufacturing process of which includes a high-temperature baking step or the like. Specifically, the colored optically anisotropic layer is desirably formed so as to have an in-plane retardation following heat treatment for 1 hour at 230°C of 75 percent or more than the in-plane retardation prior to the heat treatment. The colored optically anisotropic layer is also desirably formed so that the nonpolarized light transmittance at maximum absorption wavelengths of from 430 to 700 nm following heat treatment for 1 hour at 230°C is 60 percent or greater than the nonpolarized light transmittance prior to the heat treatment. A colored optically anisotropic layer having such heat resistance can be achieved by a method such as employing a dye with a heat-resistant skeleton, by employing a polymer of a dye having an ethylenic unsaturated double bond within the molecule, by employing an organic nanoparticle comprised of a dye polymer, or by employing an inorganic colored nanoparticle. Of these, the use of an organic dye having an azomethine or phthalocyanine skeleton is desirable, and the use of copolymers of these compounds is preferred.

The colored optically anisotropic layer of the present invention is characterized by an in-plane retardation of 10 nm or greater but less than 1,000 nm.

The optically anisotropic layer having such an in-plane retardation is not specifically limited, but a layer formed of a compound comprising a liquid crystalline compound is desirable. The desirable liquid crystalline compound has at least one reactive group. It is also desirable for the layer to be comprised of a polymer that is polymerized after orienting such a liquid crystalline compound. Such an optically anisotropic layer can be fabricated, for example, by the method of applying and drying a solution containing the liquid crystalline compound to form a liquid-crystal phase, and then irradiating heat or ionizing radiation (for example, UV light) to polymerize and achieve fixation.

The optically anisotropic layer is desirably 1 to 10 micrometers, preferably 1.5 to 4 micrometers, in thickness.

[Optically Anisotropic Layer formed by Polymerizing and Fixing Composition Comprising Liquid Crystalline Compound]

The production process of the optically anisotropic layer is explained below, wherein coating with a solution comprising a liquid crystalline compound having at least one reactive group is conducted and the solution is dried to thereby form a liquid crystal phase, and then the liquid crystal phase is polymerized and fixed by applying heat or light.

[Liquid-Crystalline Compound]

The liquid-crystalline compounds can generally be classified by molecular geometry into rod-like one and discotic one. Each category further includes low-molecular type and high-molecular type. The high-molecular type generally refers to that having a degree of polymerization of 100 or above ("Kobunshi Butsuri-Soten' i Dainamikusu (Polymer Physics-Phase Transition Dynamics), by Masao Doi, p.2, published by Iwanami Shoten, Publishers, 1992). Either type of the liquid-crystalline molecule may be used in the present invention, wherein it is preferable to use a rod-like liquid-crystalline compound or a discotic liquid-crystalline compound. A mixture of two or more rod-like liquid-crystalline compound, a mixture of two or more discotic liquid-crystalline compound, or a mixture of a rod-like liquid-crystalline compound and a discotic liquid-crystalline compound may also be used. It is more preferable that the optically anisotropic layer is formed using a composition comprising the rod-like liquid-crystalline compound or the discotic liquid-crystalline compound, having a reactive group, because such compound can reduce temperature- and moisture-dependent changes, and it is still further preferable that at least one compound in the mixture has two or more reactive group in a single liquid-crystalline molecule. The liquid-crystalline composition may be a mixture of two or more compounds, wherein at least one of the compounds preferably has two or more reactive groups.

It is also preferred that liquid-crystalline compound have two or more reactive groups which have different polymerization condition to each other. In such case, an optically anisotropic layer comprising polymer having unreacted reactive group can be produced by only polymerizing one type of reactive groups among plural types of reactive groups by selecting polymerization condition. The polymerization condition may be wavelength range of the light that is applied, or mechanism of polymerization. Preferably, the condition may be polymerization initiator, which can control polymerization of compound having a combination of a radically polymerisable group and a cationically polymerisable group. The combination of acrylic group and/or methacrylic group as a radically polymerisable group and vinyl ether group, oxetanyl group, and/or epoxy group as a cationically polymerisable group is particularly preferred, because the reactivity can be controlled easily.

Examples of the rod-like liquid-crystalline compound include azomethine compounds, azoxy compounds, cyanobiphenyl compounds, cyanophenyl esters, benzoate esters, cyclohexanecarboxylic acid phenyl esters, cyanophenylcyclohexane compounds, cyano-substituted phenylpyrimidine compounds, alkoxy-substituted phenylpyrimidine compounds, phenyldioxane compounds, tolan compounds and alkenylcyclohexylbenzonitrile compounds. Not only the low-molecular-weight, liquid-crystalline compound as listed in the above, high-molecular-weight, liquid-crystalline compound may also be used. High-molecular-weight liquid-crystalline compounds may be obtained by polymerizing low-molecular-weight liquid-crystalline compounds having at least one reactive group. Among such low-molecular-weight liquid-crystalline compounds, liquid-crystalline compounds represented by a formula (I) are preferred.

$$\text{Formula (I)}: Q^1\text{-}L^1\text{-}A^1\text{-}L^3\text{-}M\text{-}L^4\text{-}A^2\text{-}L^2\text{-}Q^2$$

In the formula, $Q^1$ and $Q^2$ respectively represent a reactive group. $L^1$, $L^2$, $L^3$ and $L^4$ each represent a single bond or a divalent linking group. $A^1$ and $A^2$ respectively represent a $C_{2-20}$ spacer group. M represents a mesogen group.

In formula (I), $Q^1$ and $Q^2$ respectively represent a reactive group. The polymerization reaction of the reactive group is preferably addition polymerization (including ring opening polymerization) or condensation polymerization. In other words, the reactive group is preferably a functional group capable of addition polymerization reaction or condensation polymerization reaction. Examples of reactive groups are shown below.

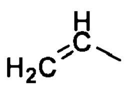
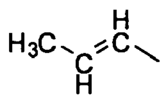
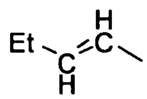
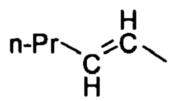

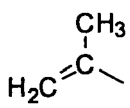
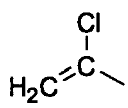
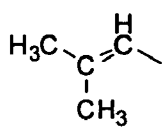
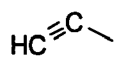

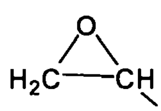
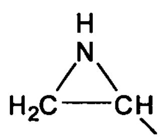

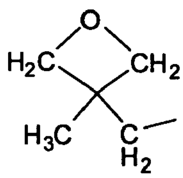
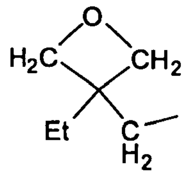
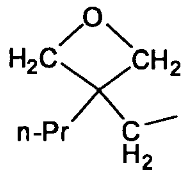

$-SH$ $-OH$ $-NH_2$

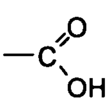
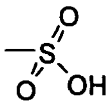
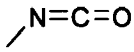
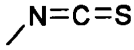

As the divalent linking group represented by each of $L^1$, $L^2$, $L^3$ and $L^4$, a divalent linking group selected from the group consisting of -O-, -S-, -CO-, $-NR^2-$, -CO-O-, -O-CO-O-, $-CO-NR^2-$, $-NR^2-CO-$, -O-CO-, $-O-CO-NR^2-$, $-NR^2-CO-O-$ and $-NR^2-CO-NR^2-$ is preferred. $R^2$ represents a $C_{1-7}$ alkyl group or a hydrogen atom. Each of $Q^1-L^1$ and $Q^2-L^2-$ is preferred to be $CH_2=CH-CO-O-$, $CH_2=C(CH_3)-CO-O-$ or $CH_2=C(Cl)-CO-O-CO-O-$; and more preferred to be $CH_2=CH-CO-O-$.

In the formula, $A^1$ and $A^2$ preferably represent a $C_{2-20}$ spacer group. Each of $A^1$ and $A^2$ is preferred to be a $C_{2-12}$ aliphatic group, and more preferred to be a $C_{2-12}$ alkylene group. The spacer group is preferably selected from chain groups and may contain at least one unadjacent oxygen or sulfur atom. And the spacer group may have at least one substituent such as a halogen atom (fluorine, chlorine or bromine atom), cyano, methyl and ethyl.

Examples of the mesogen represented by M include any known mesogen groups. The mesogen groups represented by a formula (II) are preferred.

Formula (II): $-(-W^1-L^5)_n-W^2-$

In the formula, each of $W^1$ and $W^2$ represent a divalent cyclic alkylene or alkenylene group, a divalent arylene group, or a divalent hetero-cyclic group; and $L^5$ represents a single bond or a linking group. Examples of the linking group represented by $L^5$ include those exemplified as examples of $L^1$ to $L^4$ in the formula (I) and $-CH_2-O-$and $-O-CH_2-$. In the formula, n is 1, 2 or 3.

Examples of $W^1$ and $W^2$ include 1,4-cyclohexanediyl, 1,4-phenylene, pyrimidine-2,5-diyl, pyridine-2,5-diyl, 1,3,4-thiazole-2,5-diyl, 1,3,4-oxadiazole-2,5-diyl, naphtalene-2,6-diyl, naphtalene-1,5-diyl, thiophen-2,5-diyl, pyridazine-3,6-diyl. 1,4-cyclohexanediyl has two stereoisomers, cis-trans isomers, and the trans isomer is preferred. $W^1$ and $W^2$ may independently have at least one substituent. Examples of the substituent include a halogen atom such as a fluorine, chlorine, bromine or iodine atom; cyano; a $C_{1-10}$ alkyl group such as methyl, ethyl and propyl; a $C_{1-10}$ alkoxy group such as methoxy and ethoxy; a $C_{1-10}$ acyl group such as formyl and acetyl; a $C_{2-10}$ alkoxycarbonyl group such as methoxy carbonyl and ethoxy carbonyl; a $C_{2-10}$ acyloxy group such as acetyloxy and propionyloxy; nitro, trifluoromethyl and difluoromethyl.

Preferred examples of the basic skeleton of the mesogen group represented by the formula (II) include, but not to be limited to, these described below. And the examples may have at least one substituent selected from the above.

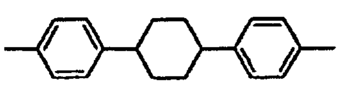
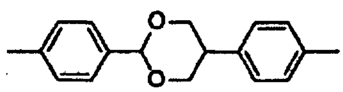

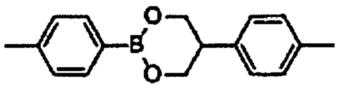

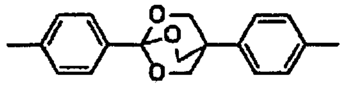

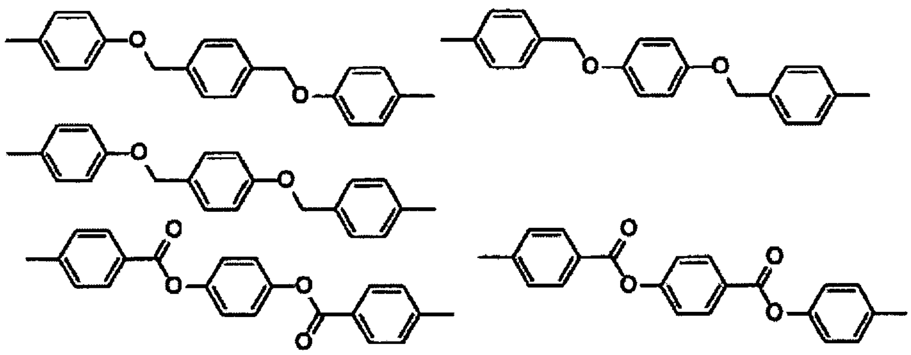

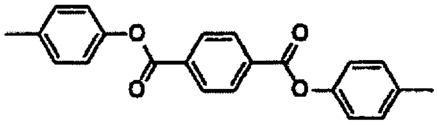

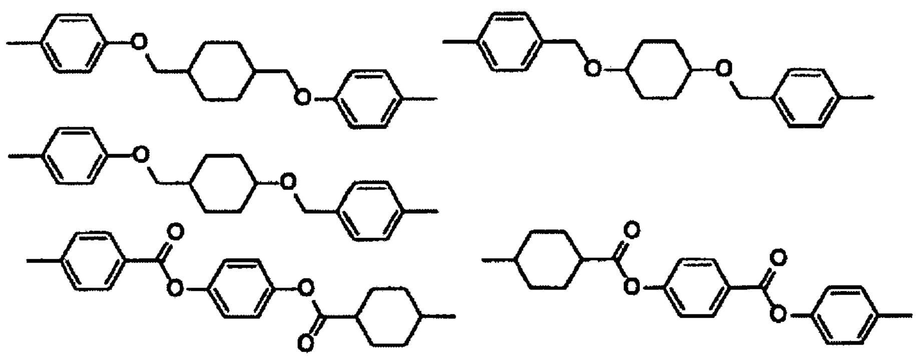

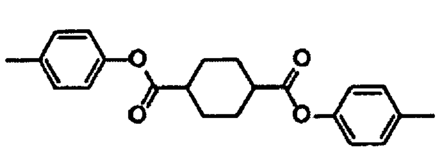

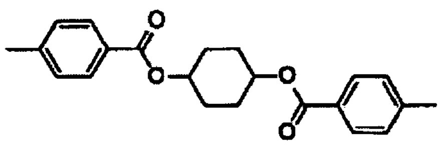

Examples the compound represented by the formula (I) include, but not to be limited to, these described below. The compounds represented by the formula (I) may be prepared according to a method described in a gazette of Tokkohyo No. hei 11-513019(WO97/00600).

I-1

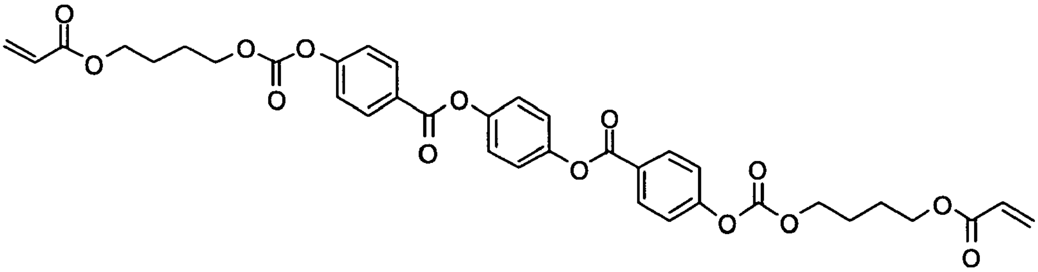

I-2

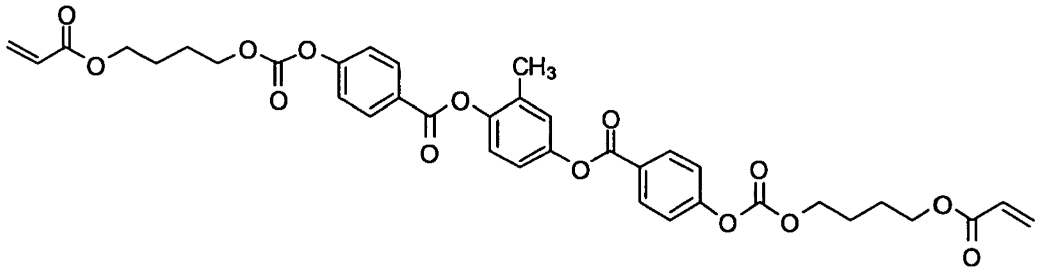

I-3

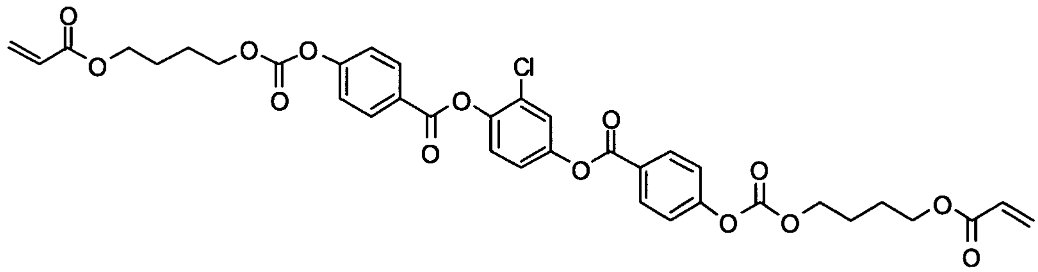

I-4

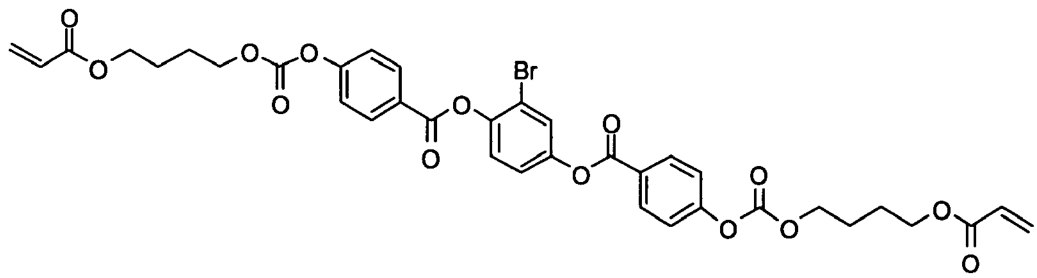

I-5

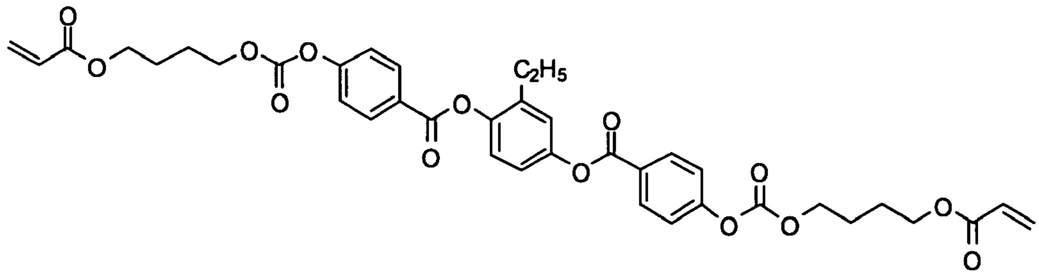

I-6

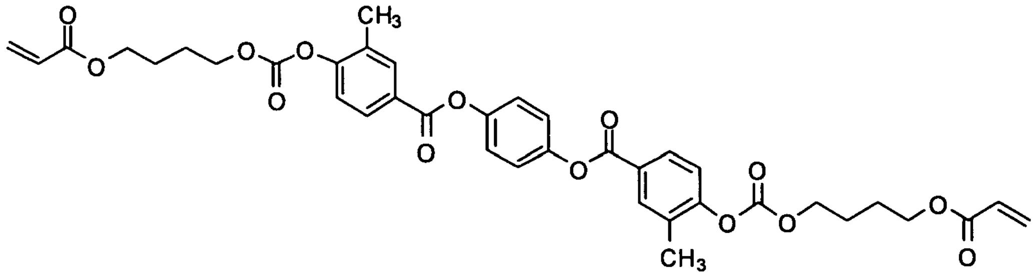

I-7

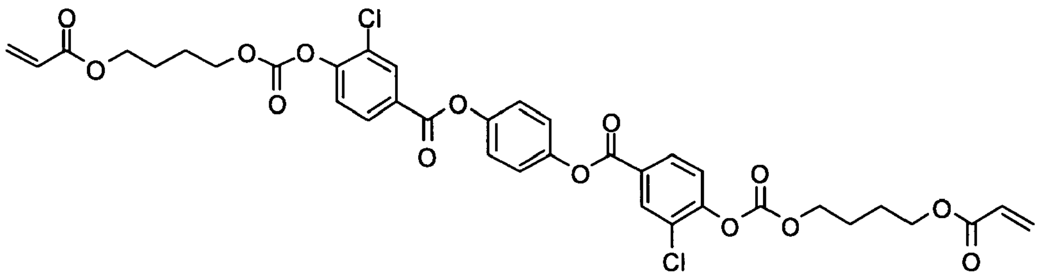

I-8

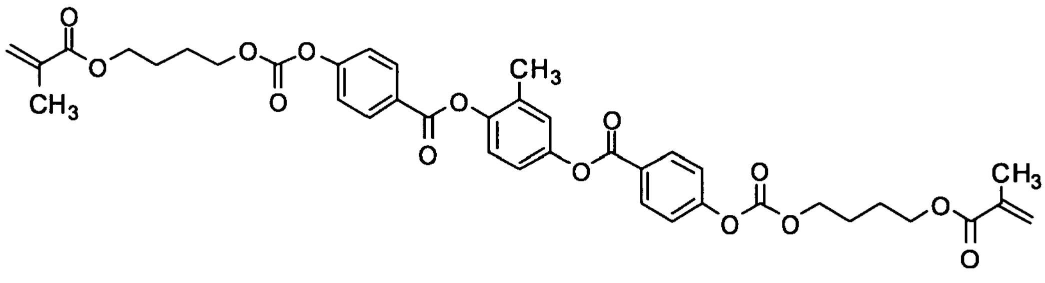

I-9

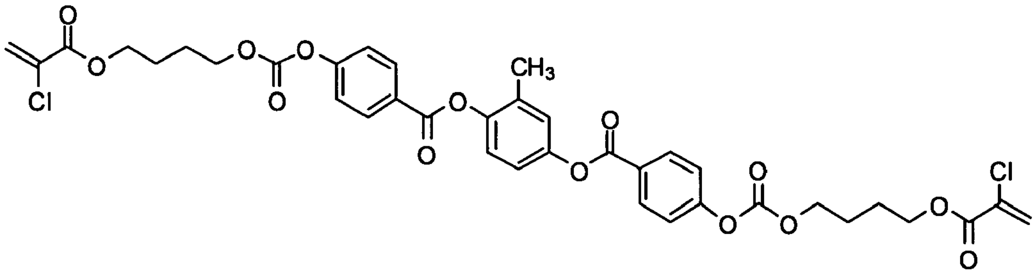

I-10

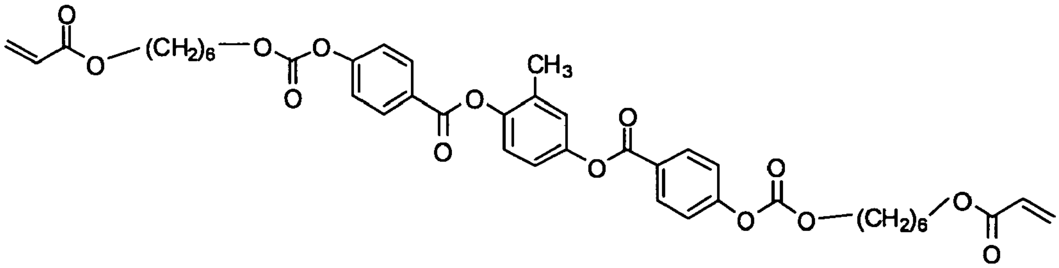

I-11

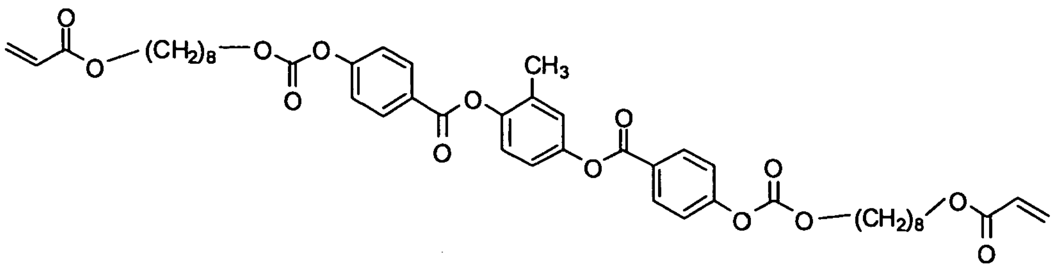

I-12

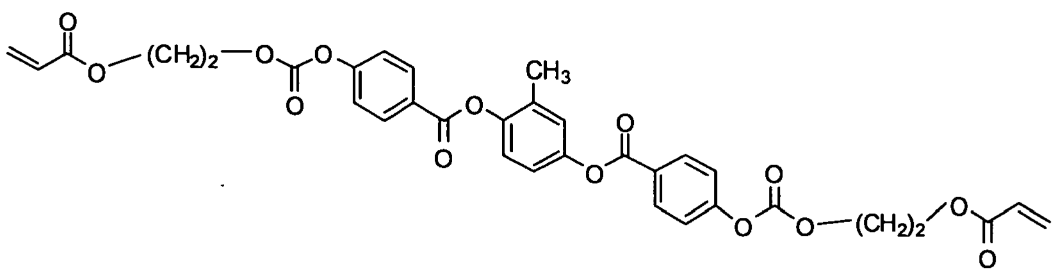

I-13

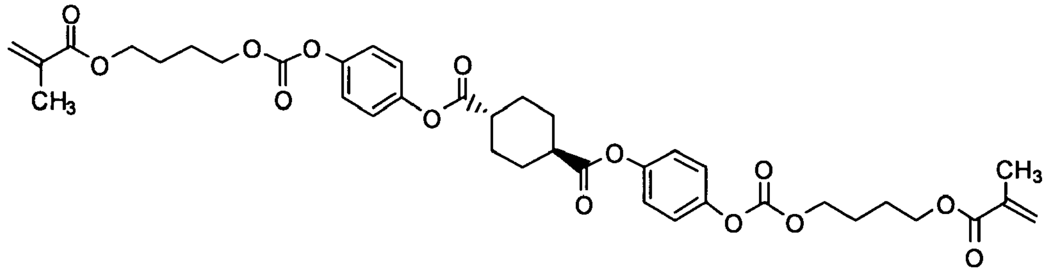

I-14

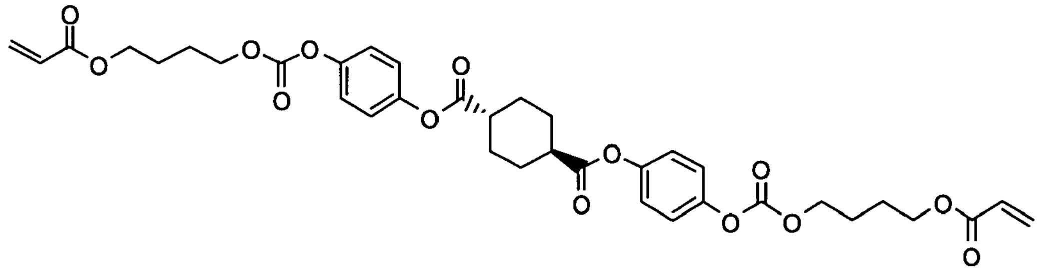

I-15

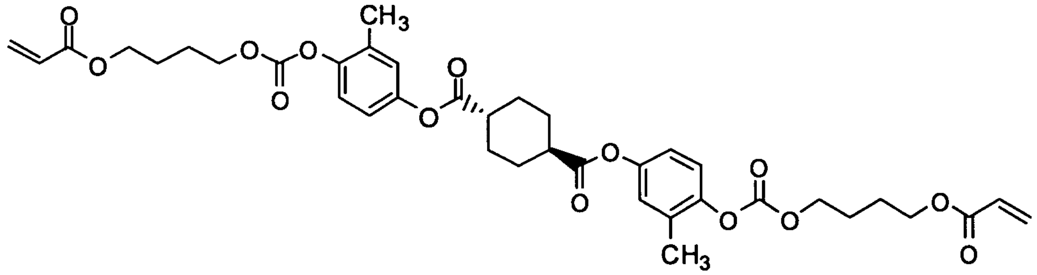

I-16

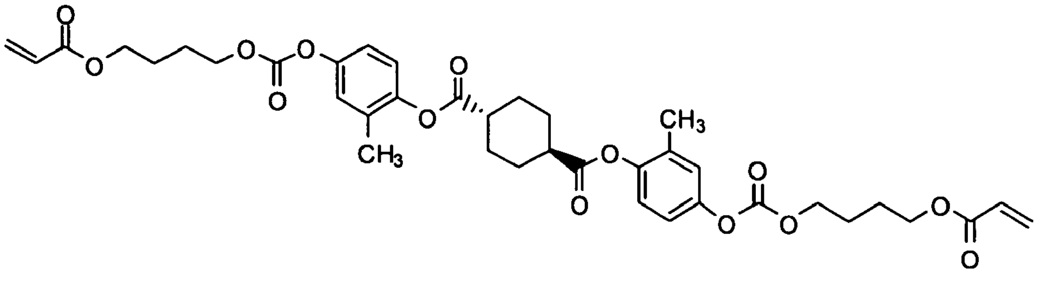

I-17

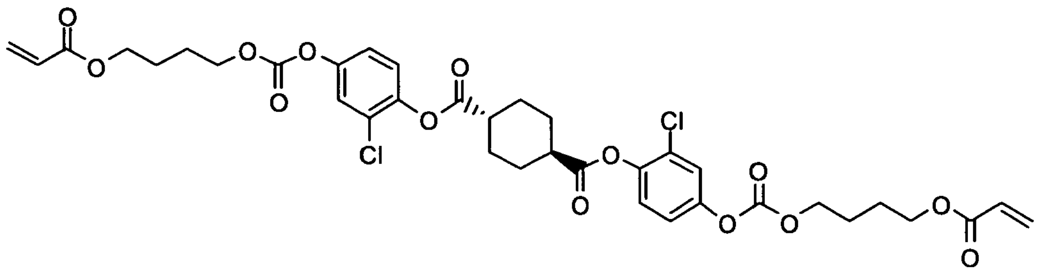

I-18

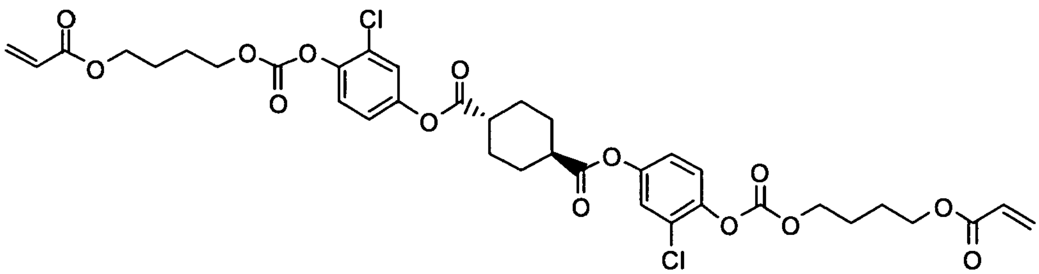

I-19

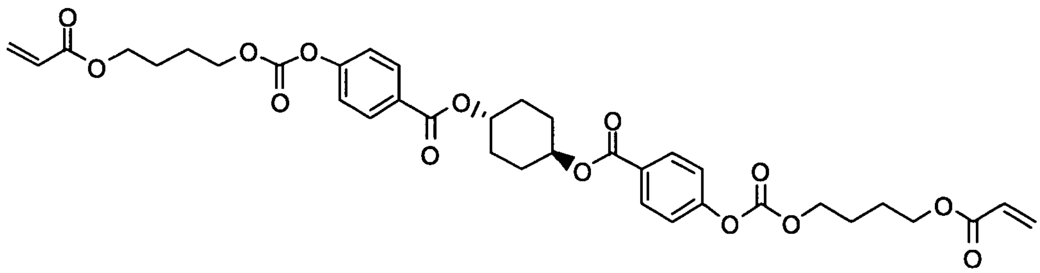

I-20

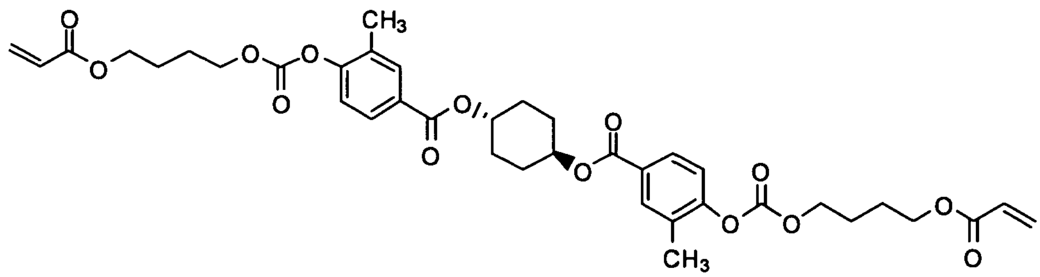

I-21

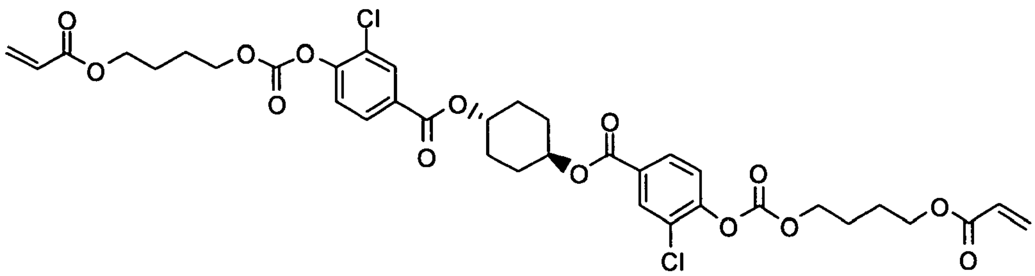

I-22

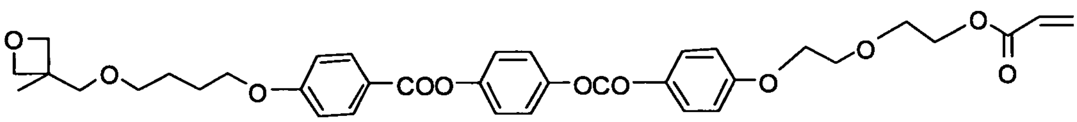

I-23

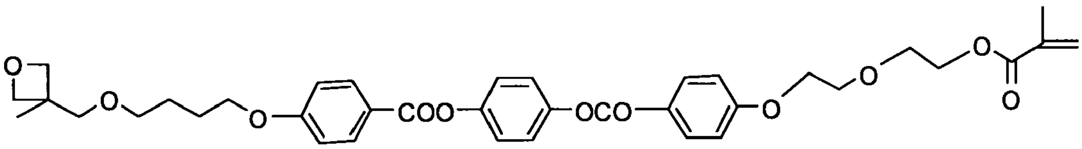

I-24

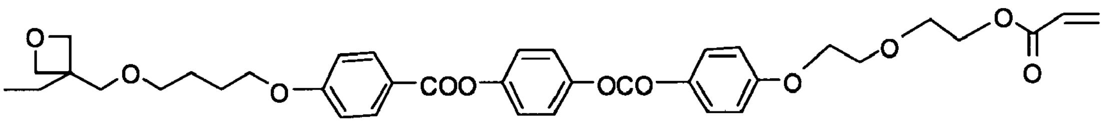

I-25

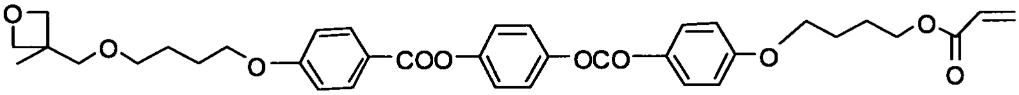

As another embodiment of the present invention, discotic liquid-crystalline compounds may also be used. The aforementioned optically anisotropic layer is preferably a polymer layer obtained by polymerization (curing) of a layer of a low-molecular-weight discotic liquid-crystalline compounds such as monomer, or a polymerizable liquid-crystalline

discotic compound. Examples of the discotic liquid-crystalline compound are described in various documents, and include benzene derivatives described in C. Destrade et al., Mol. Cryst., Vol. 171, p.111 (1981); torxene derivatives described in C. Destrade et al., Mol. Cryst., Vol. 122, p.141 (1985) and Physics Lett., A, Vol. 78, p.82 (1990) ; cyclohexane derivatives described in B. Kohne et al., Angew. Chem., Vol. 96, p.70 (1984); and azacrown-base or phenylacetylene-base macrocycles described in J. M. Lehn, J. Chem. Commun., p.1794 (1985) and in J. Zhang et al., J. Am. Chem. Soc., Vol. 116, p.2655 (1994). The above mentioned discotic (disk-like) compounds generally have a discotic core in a central portion and groups (L), such as linear alkyl or alkoxy groups or substituted banzoyloxy groups, which radiate from the core. Among them, there are compounds exhibiting liquid crystalline properties, and such compounds are generally called as discotic liquid crystal. When such molecules are aligned uniformly, the aggregate of the aligned molecules may exhibit an optically negative uniaxial property.

In the specification, the term of "formed from a discotic compound" is used not only when finally comprising the discotic compound as a low-molecular weight compound, but also when finally comprising a high-molecular weight discotic compound, no longer exhibiting liquid crystalline properties, formed by carrying out crosslinking reaction of the low-molecular weight discotic compound having at least one reactive group capable of thermal reaction or photo reaction under heating or under irradiation of light.

According to the present invention, the discotic liquid-crystalline compound selected from the formula (III) below is preferably used:

$$\text{Formula (III)} : D(-L-P)_n$$

In the formula, D represents a discotic core, L represents a divalent linking group, P represents a polymerizable group, and n is an integer from 4 to 12.

Preferred examples of the discotic core (D), the divalent linking group (L) and the polymerizable group (P) are respectively (D1) to (D15), (L1) to (L25) and (P1) to (P18) described in Japanese Laid-Open Patent Publication (Tokkai) No. 2001-4837; and the descriptions in the publication regarding the discotic core (D), the divalent linking group (L) and the polymerizable group (P) may be preferably applicable to this embodiment.

Preferred examples of the discotic compound are shown below.

TE-1

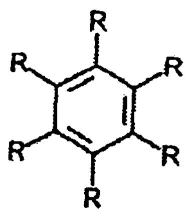

(1) R: 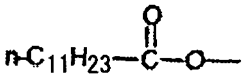

(2) 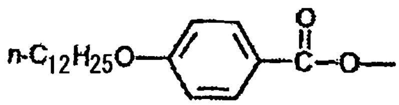 or

(3) 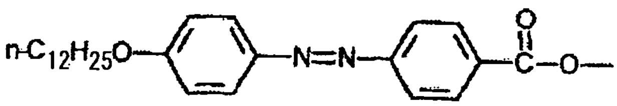

TE - 2

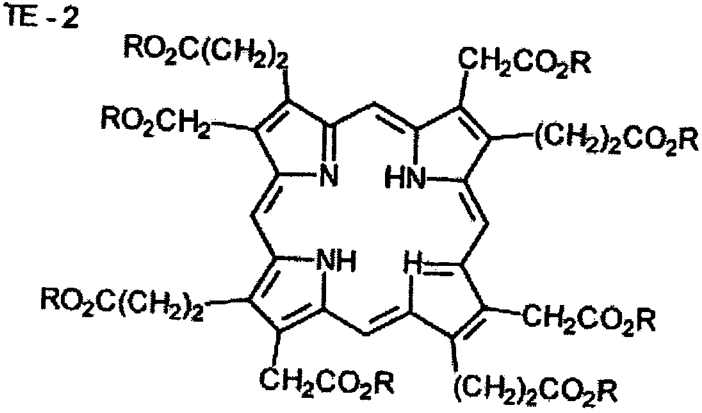

R: $n\text{-}C_{12}H_{25}$—

TE - 3

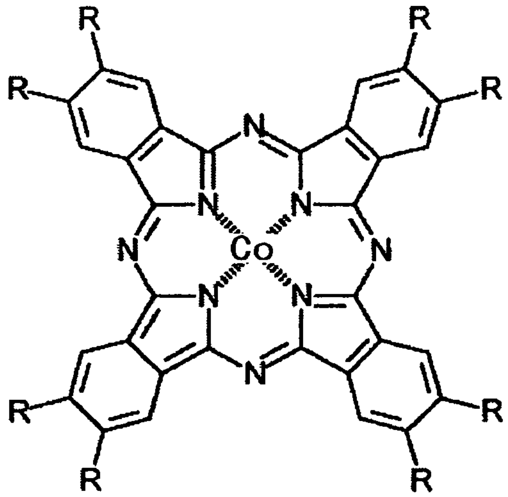

R: $n\text{-}C_{12}H_{25}OCH_2$—

TE - 4

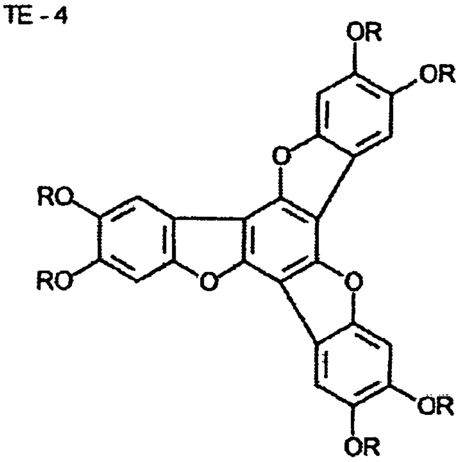

(1) R: 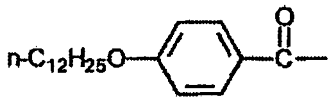 or

(2) $n\text{-}C_{13}H_{27}CO$—

TE - 5

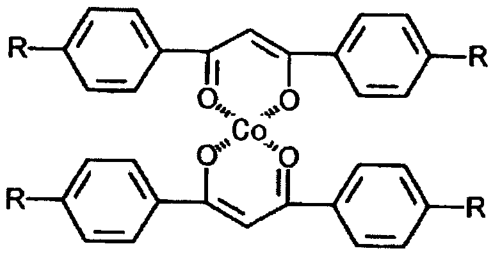

R: $n\text{-}C_{10}H_{21}$—

TE - 6

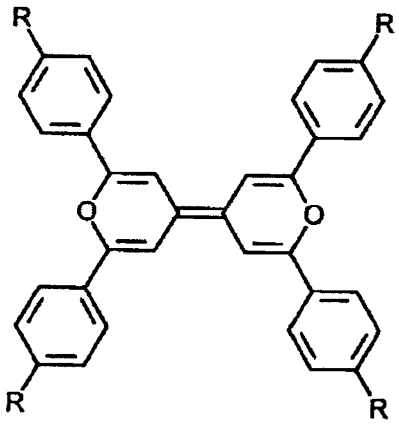

R: $n\text{-}C_8H_{17}$—

TE - 7

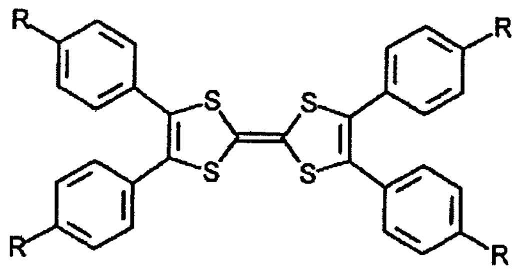

R: $n\text{-}C_{16}H_{33}O$—

TE - 8

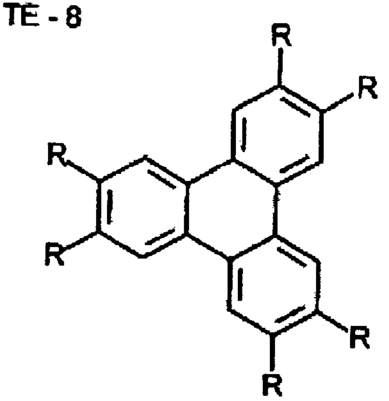

(1)

$n\text{-}C_mH_{2m+1}O—$

(m: an integer from 2 to 5)

(2)

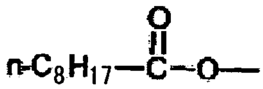

(3)

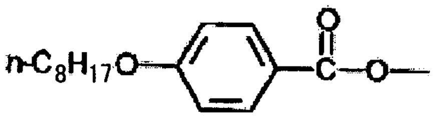

(4)

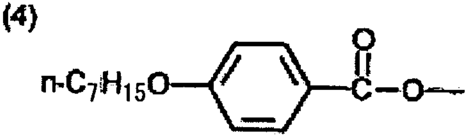

(5)

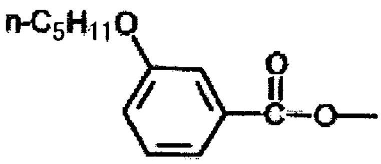

(6)

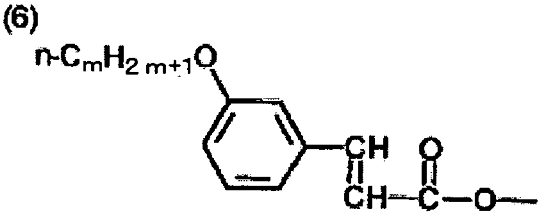

(m: an integer from 7 to10)

(7)

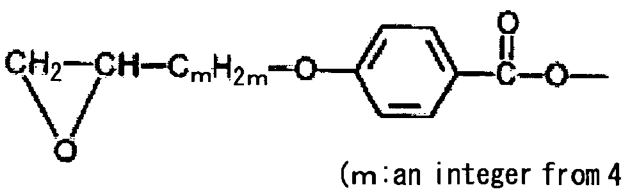

(m: an integer from 4 to10)

(8)

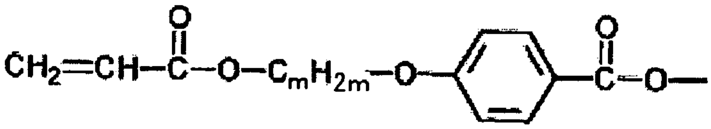

(m: an integer from 4 to10)

TE - 9

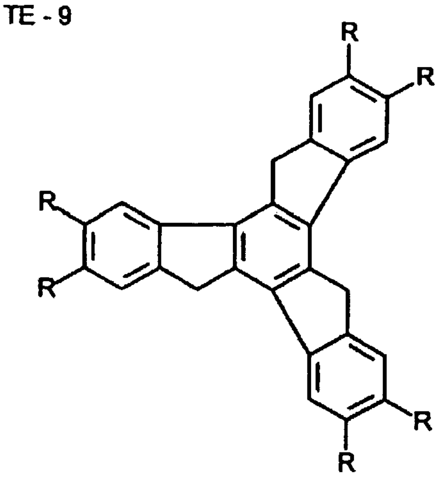

R:

(1)

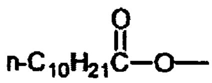

(2)

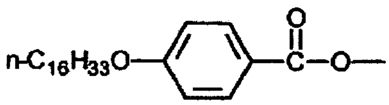

(3)

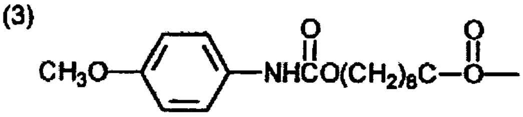

TE - 10

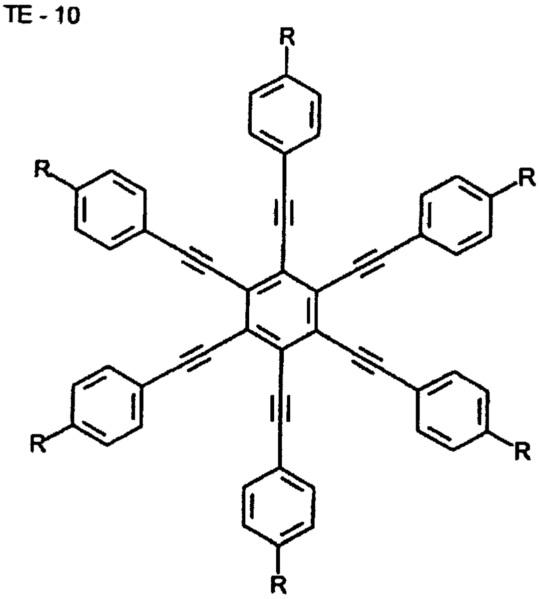

R: $C_7H_{15}O$—

TE - 11

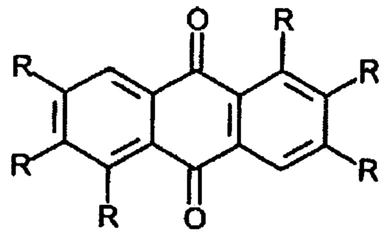

R:

(1)

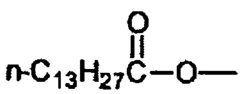

(2)

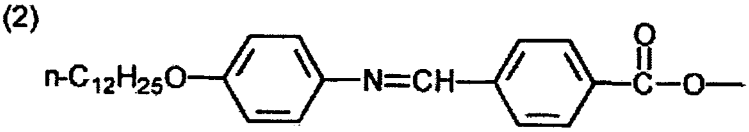

The optically anisotropic layer may be preferably formed according to a process comprising applying a composition (for example a coating liquid) comprising at least on liquid crystalline compound to a surface of, preferably, an alignment layer, described in detail later, aligning liquid crystalline molecules as to show a liquid crystal phase, and fixing the liquid crystal phase under heating or light-irradiating.

When a discotic liquid crystalline compound having polymerizable groups is used as the liquid crystalline compound, the discotic molecules in the layer may be fixed in any alignment state such as a horizontal alignment state, vertical alignment state, tilted alignment state and twisted alignment state. In the specification, each of the term "horizontal alignment" means that, regarding rod-like liquid-crystalline molecules, the molecular long axes thereof and a layer plane

are parallel to each other, and, regarding discotic liquid-crystalline molecules, the disk-planes of the cores thereof and a layer plane are parallel to each other. However, they are not required to be exactly parallel to each other, and, in the specification, the term "horizontal alignment" should be understood as an alignment state in which molecules are aligned with a tilt angle against a layer plane less than 10 degree. The tilt angle is preferably from 0 to 5 degree, more preferably 0 to 3 degree, much more preferably from 0 to 2 degree, and most preferably from 0 to 1 degree.

The optically anisotropic layer may be formed by applying a coating liquid, containing a liquid-crystalline compound, a pigment or a dye, and other additives, to a surface of an alignment layer, described in detail later. The solvent used for preparing the coating liquid is preferably an organic solvent. Examples of organic solvents include amides (e.g., N,N-dimethyl formamide), sulfoxides (e.g., dimethyl sulfoxide), heterocyclic compounds (e.g., pyridine), hydrocarbons (e.g., benzene, hexane), alkyl halides (e.g., chloroform, dichloromethane), esters (e.g., methyl acetate, butyl acetate), ketones (e.g., acetone, methyl ethyl ketone) and ethers (e.g., tetrahydrofuran, 1,2-dimethoxyethane). Alkyl halides and ketones are preferred. Two or more organic solvents may be used in combination.

[Fixing of liquid-crystalline molecules in an alignment state]

It is preferred that the liquid-crystalline molecules in an alignment state are fixed without disordering the state. Fixing is preferably carried out by the polymerization reaction of the reactive groups contained in the liquid-crystalline molecules. The polymerization reaction includes thermal polymerization reaction using a thermal polymerization initiator and photo-polymerization reaction using a photo-polymerization initiator.
Photo-polymerization reaction is preferred. Photo-polymerization reaction may be radical or cationic polymerization.

Examples of radical photo-polymerization initiators include alpha-carbonyl compounds (described in US Patents Nos. 2,367,661 and 2,367,670), acyloin ethers (described in US Patent No. 2,448,828), alpha -hydrocarbon-substituted aromatic acyloin compounds (described in US Patent No. 2,722,512), polynuclear quinone compounds (described in US Patents Nos. 3,046,127 and 2,951,758), combinations of triarylimidazole dimers and p-aminophenyl ketone (described in US Patent No. 3,549,367), acridine and phenazine compounds (described in Japanese Laid-Open Patent Publication (Tokkai) syo No. 60-105667 and US Patent No. 4,239,850) and oxadiazole compounds (described in US Patent No. 4,212,970).

As the cationic-polymerization initiator, examples include organic sulfonium salts, iodonium salts, and phosphonium salts. The organic sulfonium salts are preferred, and triphenyl sulfonium salts are particularly preferred. As a counter ion of these compounds, hexafluoroantimonate, hexafluorophosphate, or the like is preferably used.

The amount of the photo-polymerization initiators to be used is preferably 0.01 to 20 % by weight, more preferably 0.5 to 5 % by weight on the basis of solids in the coating liquid. Irradiation for polymerizing the liquid-crystalline molecules preferably uses UV rays. The irradiation energy is preferably 10 $mJ/cm^2$ to 10 $J/cm^2$, and more preferably 25 to 800 $mJ/cm^2$. Illuminance is preferably 10 to 1000 $mW/cm^2$, more preferably 20 to 500 $mW/cm^2$, and further preferably 40 to 350 $mW/cm^2$. The irradiation wavelength is preferably 250 to 450 nm, and more preferably 300 to 410 nm at the peak. Irradiation may be carried out in an atmosphere of inert gas such as nitrogen gas and/or under heating to facilitate the photo-polymerization reaction.

[Orientation induced by irradiation of polarized light]

The optically anisotropic layer may exhibit or enhance in-plane retardation attributed to photo-induced orientation with the aid of polarized light irradiation. The polarized light irradiation may be carried out in photo-polymerization process in the fixation of orientation, or the polarized light irradiation may precede and then may be followed by non-polarized light irradiation for further fixation, or the non-polarized light irradiation for fixation may precede and the polarized light irradiation may succeed for the photo-induced orientation. It is preferred that only the polarized light irradiation is conducted or the polarized light irradiation precedes and is followed by non-polarized light irradiation for further fixation. When the polarized light irradiation is carried out in photo-polymerization process in the fixation of orientation and a radical photo-polymerization initiator is used as the photo-polymerization initiator, the polarized light irradiation is preferably carried out under an inert gas atmosphere having an oxygen concentration of 0.5% or below. The irradiation energy is preferably 20 $mJ/cm^2$ to 10 $J/cm^2$, and more preferably 100 $mJ/cm^2$ to 800 $mJ/cm^2$. The illuminance is preferably 20 to 1000 $mW/cm^2$, more preferably 50 to 500 $mW/cm^2$, and still more preferably 100 to 350 $mW/cm^2$. Types of the liquid-crystalline molecule to be hardened by the polarized light irradiation are not particularly limited, wherein the liquid-crystalline molecule having an ethylenic unsaturated group as the reactive group is preferable. It is preferred that the irradiation light to be used has a peak falling within the range from 300 to 450 nm, more preferred from 350 to 400 nm.

[Post-curing with UV-light irradiation after irradiation of polarized light]

After the first irradiation of polarized light for photo-induced orientation, the optically anisotropic layer may be

irradiated with polarized or non-polarized light so as to improve the reaction rate (post-curing step). As a result, the adhesiveness is improved and, thus, the optically anisotropic layer can be produced with larger feeding speed. The post-curing step may be carried out with polarized or non-polarized light, and preferably with polarized light. Two or more steps of post-curing are preferably carried out with only polarized light, with only non-polarized light or with combination of polarizing and non-polarized light. When polarized and non-polarized light are combined, irradiating with polarized light previous to irradiating with non-polarized light is preferred. The irradiation of UV light may be or may not be carried out under an inert gas atmosphere. However, when a radical photo-polymerization initiator is used as the photo-polymerization initiator, the irradiation may be carried out preferably under an inert gas atmosphere where the oxygen gas concentration is 0.5 % or lower. The irradiation energy is preferably 20 mJ/cm$^2$ to 10 J/cm$^2$, and more preferably 100 to 800 mJ/cm$^2$. The illuminance is preferably 20 to 1000 mW/cm$^2$, more preferably 50 to 500 mW/cm$^2$, and still more preferably 100 to 350 mW/cm$^2$. As the irradiation wavelength, the irradiation of polarized light has a peak falling within the range preferably from 300 to 450 nm, more preferably from 350 to 400 nm. The irradiation of non-polarized light has a peak falling within the range preferably from 200 to 450 nm, more preferably from 250 to 400 nm.

[Horizontal orientation agent]

At least one compound selected from the group consisting of the compounds represented by formula (1), (2) or (3), and fluorine-containing homopolymer and copolymer using the monomer represented by the general formula (4), which are shown below, may be added to the composition used for forming the optically anisotropic layer may comprise, in order to promote aligning the liquid-crystalline molecules horizontally.
The formula (1) to (4) will be described in detail below.

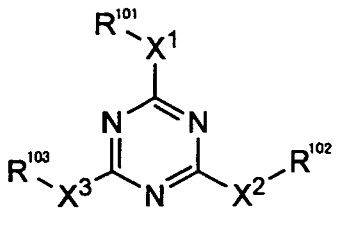

Formula (1)

In the formula, $R^{101}$, $R^{102}$ and $R^{103}$ each independently represent a hydrogen atom or a substituent; and $X^1$, $X^2$ and $X^3$ each independently represent a single bond or a divalent linking group. As the substituent represented by each $R^{101}$, $R^{102}$ and $R^{103}$, preferable examples include a substituted or unsubstituted alkyl group (an unsubstituted alkyl group or an alkyl group substituted with fluorine atom is more preferable), a substituted or unsubstituted aryl group (an aryl group having an alkyl group substituted with fluorine atom is more preferable), a substituted or unsubstituted amino group, an alkoxy group, an alkylthio group, and a halogen atom. The divalent linking group represented by each of $X^1$, $X^2$ and $X^3$ may preferably be an alkylene group, an alkenylene group, a divalent aromatic group, a divalent heterocyclic group, -CO-, -NR$^a$- (wherein R$^a$ represents a $C_{1-5}$ alkyl group or hydrogen atom), -O-, -S-, -SO-, -SO$_2$-, or a divalent linking group formed by combining two or more groups selected from the above listed groups). The divalent linking group is more preferably a group selected from a group consisting of an alkylene group, phenylene group, -CO-, -NR$^a$-, -O-, -S-, and -SO$_2$-, or a divalent linking group formed by combining two or more groups selected from the above group. The number of the carbon atoms of the alkylene group is preferably 1 to 12. The number of the carbon atoms of the alkenylene group is preferably 2 to 12. The number of the carbon atoms of the divalent aromatic group is preferably 6 to 10.

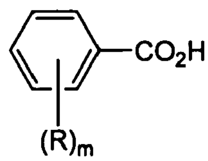

Formula (2)

In the formula, R represents a substituent, and m represents an integer of 0 to 5. When m is 2 or more, plural R may be the same or different to each other. Preferable examples of the substituent represented by R are the same as the examples listed above for each of $R^{101}$, $R^{102}$ and $R^{103}$. m is preferably an integer of 1 to 3, more preferably 2 or 3.

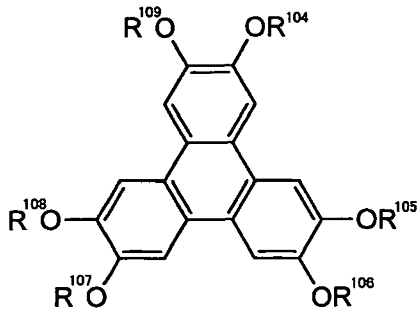

Formula (3)

In the formula, $R^{104}$, $R^{105}$, $R^{106}$, $R^{107}$, $R^{108}$ and $R^{109}$ each independently represents a hydrogen atom or a substituent. Preferable examples of the substituent represented by each of $R^{104}$, $R^{105}$, $R^{106}$, $R^{107}$, $R^{108}$ and $R^{109}$ are the same as the examples listed above for each of $R^{101}$, $R^{102}$ and $R^{103}$ in the general formula (1).

Examples of the horizontal orientation agent, which can be used in the present invention, include those described in paragraphs [0092] to [0096] in Japanese Laid-Open Patent Publication (Tokkai) No. 2005-099248 and the methods for preparing such compounds are described in the document.

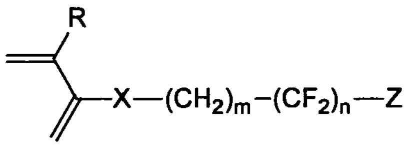

General formula (4)

In the formula, R represents hydrogen atom or methyl group, X represents oxygen atom or sulfur atom, Z represents hydrogen atom or fluorine atom; m represents an integer of 1 to 6, n represents an integer of 1 to 2. The polymer compounds described in Japanese Laid-Open Patent Publications (Tokkai) Nos. 2005-206638 and 2006-91205 can be used as horizontal orientation agents for reducing unevenness in coating. The method of preparation of the compounds is also described in the publications.

The amount of the horizontal orientation agents added is preferably 0.01 to 20 % by weight, more preferably 0.01 to 10 % by weight, and most preferably 0.02 to 1 % by weight with respect to the weight of the liquid crystalline compound. The compounds represented by the aforementioned general formula (1) to (4) may be used singly, or two or more types of them may be used in combination.

[Support]

The optical material of the present invention may include support for the purpose of maintaining the dynamic stability.

Support is not particularly limited, and it may be rigid or flexible. As a rigid support, examples include, although not particularly limited to, known glasses such as soda glass sheet having a silicon oxide film formed on the surface thereof, low-expansion glass, non-alkali glass, and silica glass sheet, resin plate, and ceramic plate. As a flexible support, examples include, although not particularly limited to, plastic films such as cellulose ester (for example, cellulose acetate, cellulose propionate, and cellulose butyrate), polyolefin (for example, norbornene based polymer), poly(meth)acrylate (for example, polymethylmethacrylate), polycarbonate, polyester, and polysulfone. In view of the convenience of handling, the thickness of the rigid support is preferably 100 to 3000 μm, and more preferably 300 to 1500 μm. The thickness of the flexible support is preferably 3 to 500 σm, and more preferably 10 to 200 μm. [Alignment Layer]

As described above, an alignment layer may be used for forming the optically anisotropic layer. The alignment layer may be generally formed on a surface of a support or a temporary support, or on a surface of an undercoating layer formed on the support. The alignment layer has ability of controlling the alignment of liquid crystalline molecules thereon, and, as far as having such ability, may be selected from various known alignment layers. The alignment layer that can be employed in the present invention may be provided by rubbing a layer formed of an organic compound (preferably a polymer), oblique vapor deposition, the formation of a layer with microgrooves, or the deposition of organic compounds (for example, omega-tricosanoic acid, dioctadecylmethylammonium chloride, and methyl stearate) by the

Langmuir-Blodgett (LB) film method.
Further, alignment layers imparted with orientation functions by exposure to an electric or magnetic field or irradiation with light are also known.

Examples of the organic compound, which can be used for forming the alignment layer, include polymers such as polymethyl methacrylate, acrylic acid /methacrylic acid copolymer, styrene/maleimide copolymer, polyvinyl alcohol, poly(N-methyrol acrylamide), polyvinylpyrrolidone, styrene/vinyl toluene copolymer, chlorosulfonated polyethylene, nitrocellulose, polyvinyl chloride, chlorinated polyolefin, polyester, polyimide, vinyl acetate/ vinyl chloride copolymer, ethylene/vinyl acetate copolymer, carboxymethyl cellulose, polyethylene, polypropylene and polycarbonates; and silane coupling agents. Preferred exampled of the polymer include polyimide, polystyrene, styrene based polymers, gelatin, polyvinyl alcohol and alkyl-modified polyvinyl alcohol having at least one alkyl group (preferably $C_6$ or longer alkyl group).

For production of an alignment layer, a polymer may preferably used. The types of polymer, which is used for forming the alignment layer, may be decided depending on what types of alignment state of liquid crystal (in particular how large of tilt angle) is preferred. For forming an alignment layer capable of aligning liquid crystalline molecules horizontally, it is required not to lower the surface energy of the alignment layer, and polymer may be selected from typical polymers have been used for alignment layers. Examples of such polymer are described in various documents concerning liquid crystal cells or optical compensation sheets. Polyvinyl alcohols, modified polyvinyl alcohols, poly acrylic acid, acrylic acid/acrylate copolymers, polyvinyl pyrrolidone, cellulose and modified cellulose are preferably used. Materials used for producing the alignment layer may have at least one functional group capable of reacting with the reactive group of liquid crystalline compound in the optically anisotropic layer. Examples of the polymer having such s functional group include polymers having side chains comprising a repeating unit having such functional group, and polymers having a cyclic moiety substituted with such a functional group. It is more preferable to use an alignment layer capable of forming a chemical bond with the liquid-crystalline compound at the interface, and a particularly preferable example of such alignment layer is a modified polyvinyl alcohol, described in Japanese Laid-Open Patent Publication "Tokkaihei" No. 9-152509, which has an acrylic group introduced in the side chain thereof using acid chloride or Karenz MOI (product of Showa Denko K.K.). The thickness of the alignment layer is preferably 0.01 to 5$\mu$m, and more preferably 0.05 to 2$\mu$m. The alignment layer may functions as an oxygen shut-off layer.

Polyimide, preferably fluorine-containing polyimide, films, which have been used as an alignment layer for LCD, are also preferable. The film may be formed by applying poly(amic acid), provided, for example, as LQ/LX series products by Hitachi Chemical Co., Ltd or as SE series products by NISSAN CHEMICAL INDUSTRIES, LTD, to a surface of the support, heating at 100 to 300 °C for 0.5 to one hour to form a polymer layer, and rubbing a surface of the polymer layer.

The rubbing treatment may be carried out with known techniques which have been employed in the usual step for aligning liquid crystalline molecules of LCD. In particular, the rubbing treatment may be carried out by rubbing a surface of a polymer layer in a direction with paper, gauze, felt, rubber, nylon or polyester fiber or the like. The rubbing treatment may be carried out, for example, by rubbing a surface of a polymer layer in a direction at several times with a cloth having same length and same diameter fibers grafted uniformly.

Examples of the material used in oblique vapor deposition include metal oxides such as $SiO_2$, which is a typical material, $TiO_2$ and $ZnO_2$; fluorides such as $MgF_2$; metals such as Au and Al. Any high dielectric constant metal oxides can be used in oblique vapor deposition, and, thus, the examples thereof are not limited to the above mentioned materials. The inorganic oblique deposition film may be produced with a deposition apparatus. The deposition film may be formed on an immobile polymer film (a support) or on a long film fed continuously.

## EXAMPLES

The present invention is described with greater specificity below through examples. The materials, reagents, substance quantities, proportions thereof, operation, and the like indicated in the examples below can be modified to suit without departing from the scope or spirit of the present invention. Accordingly, the present invention is not limited to the specific examples given below.

(Example 1: Preparation of coating liquid AR-1 for isotropic absorptive color filter and optically anisotropic layer)

The following composition was prepared, passed through a polypropylene filter with a pore size of 30 micrometers, and employed as coating liquid AR-1 for a layer that functions as an isotropic absorptive color filter and an optically anisotropic layer.

| Composition (weight %) of coating liquid AR-1 for isotropic absorptive color filter and optically anisotropic layer | |
|---|---|
| Rod-like liquid crystals (Paliocolor LC242, BASF Japan) | 16.96 |
| Photopolymerization initiator (OXE-01, made by Ciba | |

(continued)

| Composition (weight %) of coating liquid AR-1 for isotropic absorptive color filter and optically anisotropic layer | |
|---|---|
| Specialty Chemicals (Ltd.)) | 1.00 |
| Horizontal orientation agent (A-1) | 0.01 |
| Dye (M-1) | 2.82 |
| Dye (Y-1) | 1.21 |
| Cyclohexanone | 78.00 |

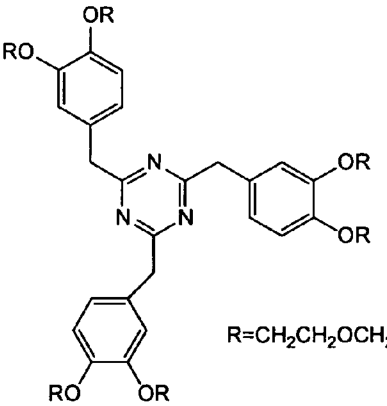

$R=CH_2CH_2OCH_2CH_2C_6F_{13}$

(A-1)

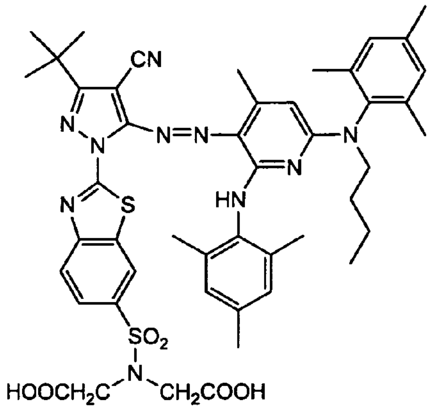

(M-1)

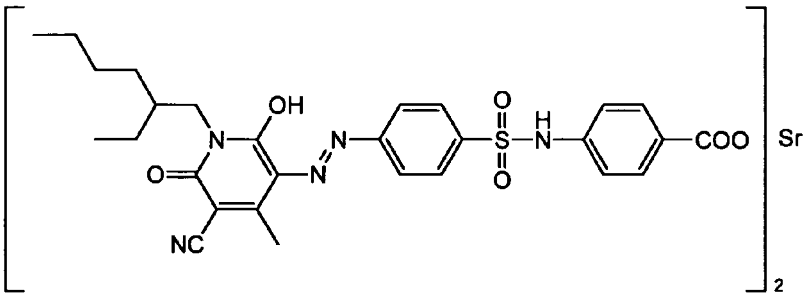

(Y-1)

(Example 2: Preparation of coating liquid AG-1 for isotropic absorptive color filter and optically anisotropic layer)

The following composition was prepared, passed through a polypropylene filter with a pore size of 30 micrometers, and employed as coating liquid AG-1 for a layer that functions as an isotropic absorptive color filter and an optically anisotropic layer.

| Composition (weight %) of coating liquid AG-1 for isotropic absorptive color filter and optically anisotropic layer | |
|---|---|
| Rod-like liquid crystals (Paliocolor LC242, BASF Japan) | 17.36 |
| Photopolymerization initiator (OXE-01, made by Ciba Specialty Chemicals (Ltd.)) | 0.78 |
| Horizontal orientation agent (A-1) | 0.01 |
| Dye (C-1) | 2.37 |
| Dye (Y-2) | 1.11 |
| N,N-dicyclohexylmethylamine | 0.37 |
| Cyclohexanone | 78.00 |

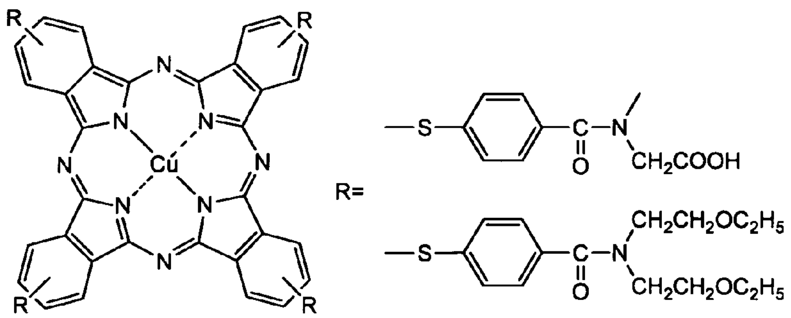

1 / 3

(C-1)

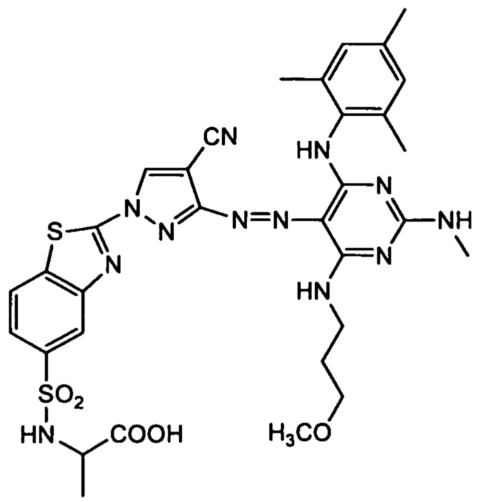

(Y-2)

(Example 3: Preparation of coating liquid AB-1 for isotropic absorptive color filter and optically anisotropic layer)

The following composition was prepared, passed through a polypropylene filter with a pore size of 30 micrometers, and employed as coating liquid AB-1 for a layer that functions as an isotropic absorptive color filter and an optically anisotropic layer.

| Composition (weight %) of coating liquid AB-1 for isotropic absorptive color filter and optically anisotropic layer | |
|---|---|
| Rod-like liquid crystals (Paliocolor LC242, BASF Japan) | 17.73 |
| Photopolymerization initiator (OXE-01, made by Ciba Specialty Chemicals (Ltd.)) | 1.33 |
| Horizontal orientation agent (A-1) | 0.01 |
| Dye (C-2) | 2.08 |
| Dye (M-2) | 0.85 |
| Cyclohexanone (Wako Pure Chemical Industries (Ltd.)) | 78.00 |

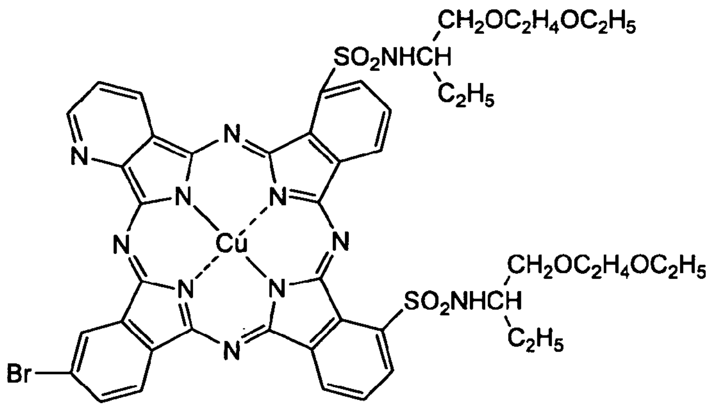

(C-2)

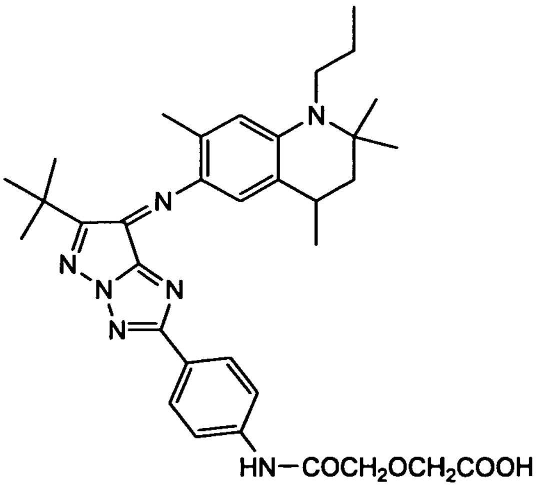

(M-2)

(UV irradiation device)

Employing a microwave-emitting UV radiation irradiating device (Light Hammer 10, 240 W/cm, made by Fusion UV systems) equipped with a D-Bulb having an intense emission spectrum at 350 to 400 nm as a UV light source, a UV irradiation device was set up 54 mm from the surface being irradiated. The maximum illumination of this device was 5.0 $W/cm^2$.

(Preparation of the colored optically anisotropic layer of the Example)

An alignment layer (SE-130, made by Nissan Chemical Industries, Ltd.) was spin coated on a glass support 1.1 mm in thickness and baked to obtain a glass substrate with an alignment film. The glass substrate with an alignment layer was rubbed, after which dust was removed from the surface of the substrate. AR-1 was applied over the alignment layer by spin coating. The coating was dried for 90 seconds at a film surface temperature of 57°C and then converted to a liquid-crystal phase state. A UV irradiation device was then employed to irradiate a dose of 1.0 $J/cm^2$ at an illumination of 2.0 $W/cm^2$ in air, thereby fixing the oriented state, yielding a colored optically anisotropic layer 1.20 micrometers in thickness as Example 1. Colored optically anisotropic layers were similarly prepared, with the exception that AR-1 was replaced with AG-1 and AB-1, respectively, as Examples 2 and 3. All of the Examples had a transmittance of 30 percent or less at a maximum absorption wavelength $\lambda$ max. None of the Examples exhibited change in transmittance of 5 percent or more over the entire wavelength range of the absorption spectrum when heat treated for 1 hour at 230°C in air.

(Retardation measurement)

An ellipsometer (M-220) made by JASCO Corporation was used to measure the in-plane retardation Re(0) at wavelengths of blue 435 nm, green 545 nm, and red 610 nm. (Haze measurement)

The haze was measured by JISK7136 Measurement Method 3 with a haze meter NDH2000 (made by Nippon Denshoku Industries Co., Ltd.) (Dichroism measurement)

Absorbance at the maximum absorption wavelength was measured with a spectrophotometer (UV-2550) with an integrating sphere, the optical system of which was equipped with a polarizer, made by Shimadzu Corporation, and the dichroism was calculated. The dichroism was calculated from the maximum value and minimum value of the transmittance at the maximum absorption wavelength when the sample was rotated.

The measurement results are given in Table 1.

Table 1

| Sample | | Re (0) | Haze | $\lambda_{max}$ | Dichroic ratio |
|---|---|---|---|---|---|
| Example 1 | AR-1 | 57.95 | 1.25 | 553 | 1.02 |
| Example 2 | AG-1 | 101.93 | 1.95 | 441 | 1.24 |
| Example 3 | AB-1 | 96.08 | 3.66 | 586 | 1.12 |

(Example 4: Preparation of color filter substrate)

A color filter substrate was fabricated using each of the coating liquids for optically anisotropic layers absorbing light in the visible range of Examples 1 to 3 as inkjet inks. A glass substrate on which a black matrix 3 micrometers in height had already been formed by the above-described photolithographic method was employed to fabricate a color filter by the above-described inkjet method in the present Example. An Apollo II and an SE-128 (made by Fujifilm Dimatix) were employed in the inkjet method.

The color filter substrates that were fabricated exhibited no decrease in saturation due to scattering or the like, and had good contrast properties.

(Example 5)

The dichroic ratio dependence of the color change from black to white was calculated with commercial LCD viewing angle property simulation software (from LCD Master and Shintech) by the application of a voltage (black: no voltage; white: maximum voltage) when the dichroic ratio of the colored optically anisotropic layer was changed in the VA-LCD with a colored optically anisotropic layer configured as shown in Fig. 1. The results are given in Fig. 2. As the dichroic ratio increased, the color on the xy chromaticity diagram varied greatly. When a dichroic ratio of 5 was exceeded, there was a change of 0.15 or greater, and when a dichroic ratio of 10 was exceeded, there was a change of greater than 0.2. The change in color was defined as the distance of the xy coordinates (⊿xy) in white and black. Since the difference was not readily identifiable to an observer at a color change of 0.02 or less, a dichroic ratio of 1.4 was determined as the permissible upper limit of the dichroic ratio.

(Example 6: Preparation of coating liquid AM-1 for isotropic absorptive color filter and optically anisotropic layer)

The following composition was prepared, passed through a polypropylene filter with a pore size of 30 micrometers, and employed as coating liquid AM-1 for a layer that functions as an isotropic absorptive color filter and an optically anisotropic layer.

| Composition (weight %) of coating liquid AR-1 for isotropic absorptive color filter and optically anisotropic layer | |
|---|---|
| Rod-like liquid crystals (Paliocolor LC242, BASF Japan) | 27.00 |
| Photopolymerization initiator (I-1) | 1.34 |
| Chiral agent (Paliocolor LC756, from BASF Japan) | 3.36 |
| 4,4'-Azoxydianisole | 0.03 |
| Styrene boronate | 0.02 |
| Horizontal orientation agent (A-1) | 0.10 |
| Dye (M-3) | 1.70 |
| Cyclohexanone(Wako Pure Chemical Industries (Ltd.)) | 66.45 |

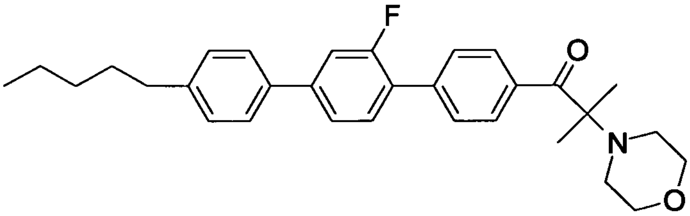

(I-1)

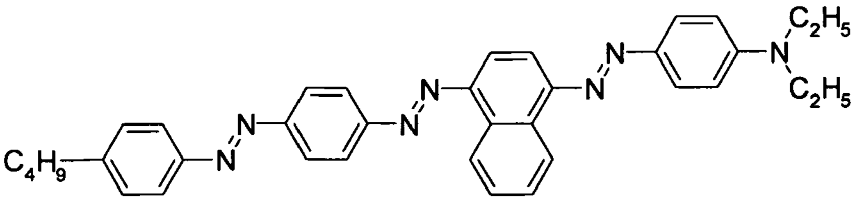

(M-3)

(Polarized UV Light Irradiation Device)

A polarized UV irradiation device was produced using a ultraviolet irradiation apparatus (Light Hammer 10, 240 W/cm, product of Fusion UV Systems) based on microwave UV light source, equipped with a D-Bulb showing a strong emission spectrum in the range from 350 to 400 nm, and disposing a wire-grid polarization filter (ProFlux PPL02 (high-tranmissivity-type), product of Moxtek) 3 cm away from the irradiation plane thereof. Maximum illuminance of the device was found to be 400 mW/cm$^2$.

(Preparation of the colored optically anisotropic layer of the Example)

An alignment layer (SE-130, made by Nissan Chemical Industries, Ltd.) was spin coated on a glass support 1.1 mm in thickness and baked to obtain a glass substrate with an alignment layer. The glass substrate with an alignment layer was rubbed, after which dust was removed from the surface of the substrate. AM-1 was applied over the alignment layer by spin coating. The coating was dried for 90 seconds at a film surface temperature of 95°C. The layer was immediately irradiated by a polarized UV light (illuminance=200 mW/cm$^2$, illumination energy=200 mJ/cm$^2$) using Polarized Light UV Irradiation Device under a nitrogen atmosphere having an oxygen concentration of 0.3% or less, while aligning the transmission axis of the polarizer plate with the TD direction of the transparent support, so as to fix the optically anisotropic layer, to thereby form a 2.80-μm-thick colored optically anisotropic layer of Example 6. Example 6 had transmittance of 30 percent or less at a maximum absorption wavelength λmax. Further, Example 6 exhibited no change in transmittance of 5 percent or more over the entire wavelength range of the absorption spectrum when heat treated for 1 hour at 230°C in air. (Retardation measurement)

An ellipsometer (M-220) made by JASCO Corporation was used to measure the in-plane retardation Re(0), and Re(40) and Re(-40) while inclining the sample by ±40° using the slow axis as the axis of rotation at a wavelength of 435 nm. (Haze measurement)

The haze was measured by JISK7136 Measurement Method 3 with a haze meter NDH2000 (made by Nippon Denshoku Industries Co., Ltd.)

(Dichroism measurement)

Absorbance at the maximum absorption wavelength was measured with a spectrophotometer (UV-2550) with an integrating sphere, the optical system of which was equipped with a polarizer, made by Shimadzu Corporation, and the dichroism was calculated. The dichroism was calculated from the maximum value and minimum value of the transmittance at the maximum absorption wavelength when the sample was rotated.

The measurement results are given in Table 2.

Table 2

| Sample | Re(0) | Re(40) | Re(-40) | Haze | $\lambda_{max}$ | Dichroic ratio |
|---|---|---|---|---|---|---|
| Example 6 AM-1 | 18.1 | 47.8 | 47.9 | 2.31 | 554 | 1.35 |

INDUSTRIAL APPLICABILITY

The present invention provides an optical material comprising a colored optically anisotropic layer that can be employed as a material for forming a color filter having optical compensation capability in a liquid-crystal display device.

## Claims

**1.** An optical material comprising a colored optically anisotropic layer,
said colored optically anisotropic layer having at least one maximum absorption wavelength with a nonpolarized light transmittance of 30 percent or lower in a wavelength range of 430 to 700 nm,
wherein the absorbance Amax at the polarization of maximum absorbance and the absorbance Amin at the polarization of minimum absorbance of said colored optically anisotropic layer satisfy the following relation at the maximum absorption wavelength:

$$1.0 \leq Amax/Amin \leq 1.4,$$

and the in-plane retardation of said colored optically anisotropic layer is greater than or equal to 10 nm and less than 1,000 nm.

**2.** The optical material according to claim 1, wherein the colored optically anisotropic layer is a layer formed from a composition comprising a liquid crystalline compound.

**3.** The optical material according to claim 2, wherein the colored optically anisotropic layer is a layer formed from a composition comprising a liquid crystalline compound having two or more intramolecular polymerizable groups.

**4.** The optical material according to any one of claims 1 to 3,
wherein the colored optically anisotropic layer is a layer formed from a composition comprising a pigment with a particle diameter of 20 nm or less or a dye that is soluble in solvent.

**5.** The optical material according to any one of claims 1 to 4,
wherein the colored optically anisotropic layer is a layer formed from a composition containing a compound denoted by general formula (D1), (D2), or (D3) below:

General formula (D1): Q-N=N-Q

General formula (D2):

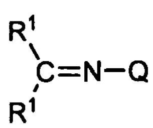

General formula (D3):

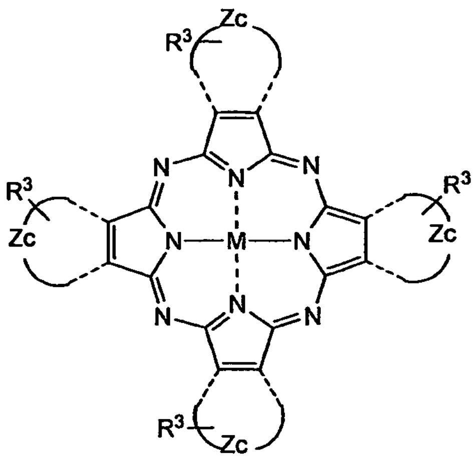

$R^3$ = H, Br, or

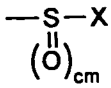

where in general formulas (D1) to (D3), Q may be identical to or different from the other, and denotes an optionally substituted five- to seven-membered ring; $R^1$ may be identical to or different from the other and denotes a substituent, or both $R^1$ are bonded together to form an optionally substituted five- to seven-membered ring; M denotes two hydrogen atoms, a divalent metal atom, a divalent metal oxide, a divalent metal hydroxide, or a divalent metal chloride; Zc denotes a nonmetal atom group required to form a six-membered ring with two carbon atoms to which Zc is bonded; $R^3$ may be identical to or different to each other, and denotes a substituent; X denotes a substituent; and cm denotes 0, 1, or 2.

**6.** The optical material according to any one of claims 1 to 5, having biaxial refractive index anisotropy.

**7.** The optical material according to claim 1, wherein the colored optically anisotropic layer comprises a liquid crystalline compound, a diazo or trisazo dichroic dye, and a chiral agent, and is a cholesterically oriented layer.

**8.** The optical material according to any one of claims 1 to 7, wherein the colored optically anisotropic layer is comprised of two or more regions, each of which has at least one maximum absorption wavelength differing from those of the other regions.

**9.** The optical material according to claim 8, wherein each of the regions has a maximum absorption wavelength selected from the group consisting of 435 ± 30 nm, 545 ± 30 nm, and 610 ± 40 nm, and the maximum absorption wavelength of each region is different from those of the other regions.

**10.** The optical material according to claim 8, wherein each of the regions has two maximum absorption wavelengths selected from the group consisting of 435 ± 30 nm, 545 ± 30 nm, and 610 ± 40 nm, and at least one of the maximum absorption wavelengths of each region is different from those of the other regions.

**11.** The optical material according to any one of claims 8 to 10, wherein each of the regions is formed by an inkjet process.

**12.** A liquid-crystal display device comprising an optical anisotropic color filter in the form of the optical material described in any one of claims 8 to 11.

**13.** The liquid-crystal display device according to claim 12, **characterized by** being in VA, IPS, or FFS mode.

Fig.1

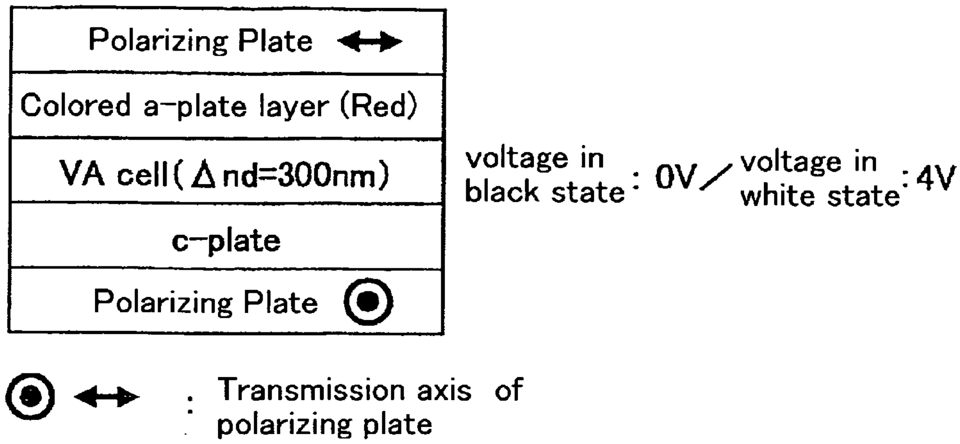
Polarizing Plate
Colored a-plate layer (Red)
VA cell(Δnd=300nm)
c-plate
Polarizing Plate
voltage in black state : 0V / voltage in white state : 4V
: Transmission axis of polarizing plate

Fig.2

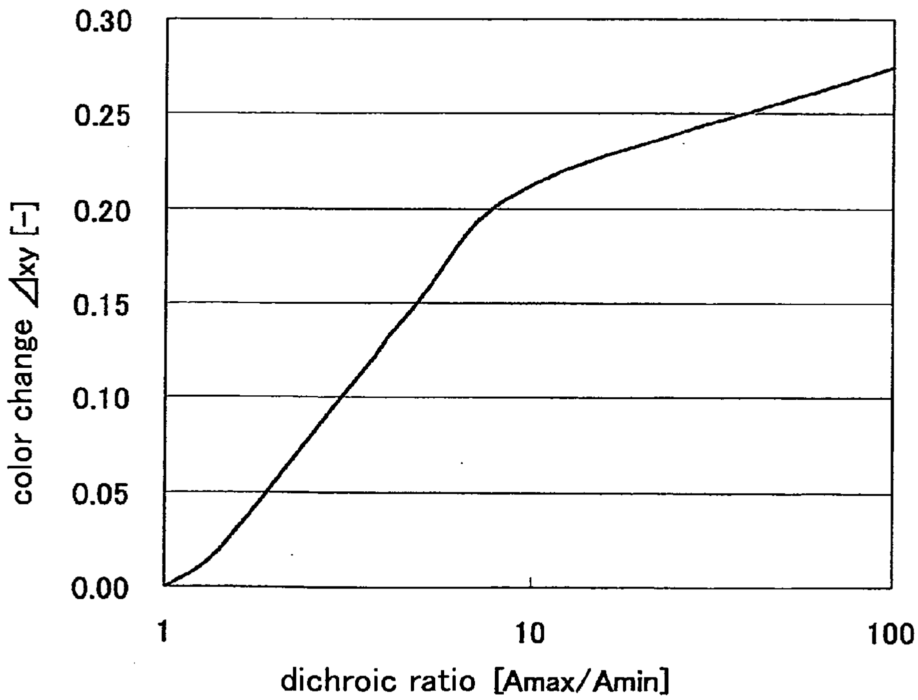
0.30
0.25
0.20
0.15
0.10
0.05
0.00
color change ⊿xy [-]
1
10
100
dichroic ratio [Amax/Amin]

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2004037837 A
- GB 2394718 A
- JP 2001290023 A
- JP 53035564 A
- JP 10330638 A
- JP 2001335804 A
- JP 2004151313 A
- JP 2007023168 A
- JP 2007112876 A
- JP 2007169575 A
- JP 2007262378 A
- JP 2005189802 A
- JP 2006047497 A
- JP 2006047581 A
- JP 2006047582 A
- JP 2006047676 A
- JP 2006047752 A
- JP 2006058700 A
- JP 2006071822 A
- JP 2006091190 A
- JP 2006330717 A
- JP 2006330718 A
- JP 2007094188 A
- JP 6490403 B
- JP 6491102 B
- JP 1094301 A
- JP 6011614 A
- JP 2592207 B
- US 4808501 A
- US 5667920 A
- US 5059500 A
- JP 5333207 A
- JP 6035183 A
- JP 6051115 A
- JP 6194828 A
- JP 9323420 A
- EP A277703 A
- EP A278590 A
- JP 2006171382 A
- JP HEI11513019 B
- WO 9700600 A
- JP 2001004837 A
- US 2367661 A
- US 2367670 A
- US 2448828 A
- US 2722512 A
- US 3046127 A
- US 2951758 A
- US 3549367 A
- JP 60105667 A
- US 4239850 A
- US 4212970 A
- JP 2005099248 A
- JP 2005206638 A
- JP 2006091205 A
- JP 9152509 A


### Non-patent literature cited in the description


- Lange's Handbook of Chemistry. McGraw-Hill, 1979
- The Chemical Domain. Nankodo, 1979, 96-103
- Color Liquid-Crystal Displays. Sangyo Tosho, 1990, 241-243
- **Masao Doi.** Kobunshi Butsuri-Soten' i Dainamikusu. Iwanami Shoten, Publishers, 1992, 2
- **C. Destrade et al.** *Mol. Cryst.,* 1981, vol. 171, 111
- **C. Destrade et al.** *Mol. Cryst.,* 1985, vol. 122, 141
- *Physics Lett., A,* 1990, vol. 78, 82
- **B. Kohne et al.** *Angew. Chem.,* 1984, vol. 96, 70
- **J. M. Lehn.** *J. Chem. Commun.,* 1985, 1794
- **J. Zhang et al.** *J. Am. Chem. Soc.,* 1994, vol. 116, 2655